(19) Europäisches Patentamt

European Patent Office

Office européen des brevets

(11) **EP 0 889 607 B1**

(12) **EUROPEAN PATENT SPECIFICATION**

(45) Date of publication and mention
of the grant of the patent:
**29.05.2002   Bulletin 2002/22**

(51) Int Cl.$^7$: **H04B 13/00**

(21) Application number: **98305242.4**

(22) Date of filing: **01.07.1998**

(54) **An electric vector potential based communications system**

Übertragungssystem auf Basis des elektrischen Vektorpotentials

Système de communication à base du vecteur potential électrique

(84) Designated Contracting States:
**DE FR GB NL**

(30) Priority: **01.07.1997   JP 17618997
14.07.1997   JP 18869897
03.09.1997   JP 23870797
03.09.1997   JP 23873597
18.09.1997   JP 25391797
11.05.1998   JP 12789798**

(43) Date of publication of application:
**07.01.1999   Bulletin 1999/01**

(73) Proprietor: **SUMITOMO SPECIAL METALS CO.,
LTD.
Osaka-shi Osaka (JP)**

(72) Inventors:
• **Yamashita, Osamu,
Sumitomo Special Metals Co. Ltd.
Mishima-gun, Osaka 618-0013 (JP)**

• **Kawakami, Makoto,
Sumitomo Special Metals Co. Ltd.
Suita-shi, Osaka 564-0043 (JP)**
• **Saigo, Tsunekazu,
Sumitomo Special Metals Co. Ltd.
Mishima-gun, Osaka 618-0013 (JP)**

(74) Representative: **Charlton, Peter John
Elkington and Fife
Prospect House
8 Pembroke Road
Sevenoaks, Kent TN13 1XR (GB)**

(56) References cited:
**EP-A- 0 050 523          EP-A- 0 736 984**

• **TAKAFUMI KOSEKI ET AL: "INVESTIGATION OF
SECONDARY SLOT PITCHES OF A CAGE-TYPE
LINEAR INDUCTION MOTOR" IEEE
TRANSACTIONS ON MAGNETICS,US,IEEE INC.
NEW YORK, vol. 29, no. 6, 1 November 1993
(1993-11-01), pages 2944-2946, XP000432363
ISSN: 0018-9464**

**Description**

BACKGROUND OF THE INVENTION

Field of the Invention

The present invention relates to a method for generating an electric vector potential which is utterly novel energy, a novel energy propagation system and a communication system using the electric vector potential, and a sending device and a receiving device in the communication system.

Description of the Prior Art

Hitherto, as the energy propagation means, utilization of microwaves in the cosmos space and the like, and as general communication means, utilization of electric wave, have widely been known. However, these waves are liable to be shielded by obstacles, and it often occurs that the sending and receiving of energy and signals are inconvenienced depending on the place of use or environment.

In addition, the communication system utilizing the electromagnetic wave, e.g., portable telephone, has leaking electromagnetic waves of several hundred milligauss, and it is liable to cause erroneous working of precision apparatuses at an extra-near distance and induce various troubles. Besides, the possibility of its ill effect on the human body is not negligible. Under such circumstances, development of new communication means that can settle the problems given above is desired.

EP-50523 describes a communications system and electromagnetic transmission using a curl-free magnetic vector potential.

The article "Investigation of secondary slot pitches of a cage-type linear induction motor", by Koseki et al, IEEE Transactions on Magnetics, vol 29 (1993), describes the design of a linear induction motor. An electric vector potential T is mentioned, which in the context of this document related to the current by $J = \nabla \times T$.

BRIEF SUMMARY OF THE INVENTION

The present inventors have come to predict, in the course of their study on communication system, the existence of new energy called electric vector potential, hinted by the magnetic vector potential whose existence has already been evidenced (Phys. Rev. Lett. 48, 1443 (1982).

And, the inventors attempted to construct the theory on the electric vector potential and to evidence the existence thereof, and ultimately realized them. Furthermore, as a result of the exploration of the practical use of it through the study process, they have come to know that the electric vector potential has characteristics such that it can be propagated to relatively far destination, that it can be propagated without being affected by the presence of the electric conductive substance such as a metal which functions as a shield to the electromagnetic wave, and the like, and that it can be utilized as a new medium for communication to take the place of the electromagnetic wave.

An object of the present invention is to provide a method by which an electric vector potential per se can be efficiently generated.

Another object of the present invention is to provide a propagation system for electric vector potential, namely, an energy propagation system therefor.

A further object of the present invention is to provide a communication system using the electric vector potential as a propagation medium.

A still further object of the present invention is to provide a sending device and a receiving device to be used for the communication system using the electric vector potential.

A still further object of the present invention is to provide a method for generating and propagating an electric vector potential in an extensive range, an energy propagation system and a communication system.

A still further object of the present invention is to provide a communication system in which the communication by electric vector potential can be made in sufficiently distant places by the application of a low level, low frequency alternating current voltage, and a sending device to be used for the purpose.

A still further object of the present invention is to provide a sending device which can be formed into small size and light weight without sacrificing the propagation distance of the electric vector potential.

A still further object of the present invention is to provide a communication method and a communication system with which communication can be performed in a place where radio obstruction occurs or where provision of a wire line such as a telephone is difficult.

A still further object of the present invention is to provide a communication method and a communication system to back up the communication by conventional wire line or wireless line by providing a sending and receiving device using an electric vector potential as a relay base center in a place where radio obstruction occurs or where provision of cable is difficult.

A still further object of the present invention is to provide a terminal device with enhanced use convenience as a communication terminal, by making it possible to effect bi-directional conversions between the electric vector potential and the sound.

A still further object of the present invention is to provide a sending device with which erroneous working of external apparatus and ill effect on human body can be prevented by shielding the externally radiated electromagnetic wave.

A still further object of the present invention is to provide a receiving method and a receiving device with which the detection sensitivity of the magnetic field by generation of the electric vector potential can be outstandingly improved, by magnetically shielding the magnetic field formed by the electromagnetic wave generated from the external apparatus or the like.

The present invention has been completed as practical technique based on the electric vector potential systematized by the present inventors, as described later. As the practical technique there are disclosed an energy propagation system utilizing the electric vector potential as a propagation medium for energy and a communication system using the electric vector potential as a signal propagation medium.

In the present invention, an oscillating voltage is applied to dielectrics to generate an electric vector potential. Accordingly, the electric vector potential can be efficiently generated.

In the present invention, energy is propagated by using the electric vector potential. The energy sending apparatus has dielectrics made by providing the electrodes on both end faces, and generates the electric vector potential by applying the alternating current voltage to these electrodes. In this case, by varying the voltage and frequency of the alternating current voltage to be applied, the magnitude of the electric vector potential to be generated is fluctuated, and/or, by making the application of the alternating current voltage intermittent, generation of the electric vector potential is made intermittent. And, the generated electric vector potential is sent out. The energy receiving apparatus has a magnetic sensor, and it detects the magnetic field produced by the reaching electric vector potential with the magnetic sensor, and the output of the magnetic sensor corresponds to the received energy.

In this way, using the electric vector potential, energy propagation can be made without being affected by the presence of the conductor such as metal.

Also, by arranging a plurality of dielectrics provided with the electrodes at both end faces radially on approximately the same plane, it becomes possible to receive the energy in a broad range by propagating the electric vector potential in all directions.

Further, for the purpose of preventing the erroneous working of peripheral apparatus and ill effect on human body, it is desirable to store the energy sending apparatus in a cylinder made of Permalloy or the like to shield the radioactive electromagnetic wave. It is also desirable to shield magnetically the energy receiving apparatus with a soft magnetic metal or the like so that the noise magnetic field by electromagnetic wave generated from the peripheral apparatus is not detected by the magnetic sensor.

In the present invention, information communication is performed by utilizing the electric vector potential as a signal propagation medium. The sending device has dielectrics with electrodes provided at both end faces, and on application of the alternating current voltage modulated corresponding to the signal to be propagated, i.e., the oscillating voltages having different frequency and/or voltage to these electrodes, an electric vector potential is generated from the dielectrics. The generated electric vector potential is sent out to the receiving device through a wireless line. The receiving device has a magnetic sensor, detects the magnetic field formed by the conveyed electric vector potential with the magnetic sensor, and obtains the propagated signal from the detection results.

In this way, using the electric vector potential, a communication system having concise whole equipment with which the sending and receiving can be made in and out of the building without being shielded can be realized. In addition, the sending device and the receiving device in this communication system are of extremely simple constitution and accordingly can be offered at a low cost.

In the communication system of the present invention, by providing a relay base center of the communication line utilizing the electric vector potential having excellent permeability in place of the conventional wireless line or wire line in a place where the electric wave obstruction occurs, or where provision of a wire line such as a telephone is difficult, it becomes possible to make communication. Moreover, the communication system of the present invention involves no problem of electric wave obstruction, no possibility of giving ill effect by the leaking magnetic field as in the portable telephone, and since the electric vector potential has only the reciprocal action to change the phase of the particles (e.g., electron) having magnetic dipole, its reciprocal action is very weak, it has excellent permeability without being shielded by the conductive member or the like, and it is very excellent more than the conventional communication medium.

Furthermore, by arranging a plurality of the dielectrics provided with the electrodes at both end faces radially on approximately the same plane, the problem in communication by the electric vector potential in which the propagating direction of the sent electric vector potential depends largely on the configuration of the dielectrics on the sending side in comparison with the conventional communication by electromagnetic wave can be dissolved, and the signal can be propagated in all directions utilizing the electric vector potential as a medium for signal propagation, so that the measured magnetic field is stabilized without being affected by the receiving position.

The thickness of the dielectrics is set to be no more than 5 mm, and the relative dielectric constant to be more than 500. When the setting is so made, the electric vector potential can be propagated over sufficiently remote distance even by applying a low level, low frequency alternating current voltage to the dielectrics. Also, it is possible to reduce the voltage and frequency of the power source for sending, provision of earth line is unnecessary, reduction in weight can be expected, and it becomes easy to carry the sending device.

Further, for the purpose of preventing the erroneous working of peripheral apparatus and ill effect on human body, it is desirable to store the sending device in a cylinder made of Permalloy or the like to shield the radioactive electromagnetic wave. It is also desirable to shield magnetically the detecting part of the receiving device with a soft magnetic metal or the like so that the noise magnetic field by electromagnetic wave generated from the peripheral apparatus is not detected by the magnetic sensor. By so doing, without having the effect of the surrounding magnetic field, the oscillating magnetic field by the electric vector potential can be detected in good precision. As a magnetic sensor, there can be used for example a parallel flux gate type magnetic sensor, and in such a case only the magnetic field component having the same frequency as the exciting current can be detected, thereby making it possible to improve the receiving precision.

The above and further objects and features of the invention will more fully be apparent from the following detailed description with accompanying drawings.

BRIEF DESCRIPTION OF THE SEVERAL VIEWS OF THE DRAWINGS

FIG. 1 is an illustration of the concept of the electric vector potential;
FIG. 2A is an illustration of the electric vector potential by the polarization vector of the dielectric bar;
FIG. 2B is an illustration of the magnetic vector potential of the permanent bar magnet;
FIG. 3A is an illustration of the electric vector potential by the polarization vector of the dielectric bar;
FIG. 3B is a distribution view of the electric vector potential in an elliptical columnar dielectric bar;
FIG. 3C is an illustration of the magnetic vector potential of the permanent bar magnet;
FIG. 4 is a schematic diagram showing the constitution of an example of the energy propagation system;
FIG. 5 is a schematic diagram showing the constitution of another example of the energy propagation system;
FIG. 6 is a schematic diagram showing the constitution of the communication system;
FIG. 7 is a block diagram showing the equipment of the relay base center;
FIG. 8 is a schematic diagram showing the electric vector potential sending device to be provided in the relay base center;
FIG. 9 is an illustration showing the arrangement of the capacitors which constitute the sending device;
FIG. 10 is a block diagram showing the other equipment of the relay base center;
FIG. 11 is a block diagram showing the equipment of the terminal device;
FIG. 12 is a sectional view showing the electromagnetic wave shield condition of the electric vector potential sending device;
FIG. 13A is a plan view and a side view showing the configuration of other example of dielectrics;
FIG. 13B is a plan view and a side view showing the configuration of still other example of dielectrics;
FIG. 14 is an illustration of an oscillating magnetic field by electric vector potential;
FIG. 15 is a brief constitution diagram of the detecting part of the parallel flux gate type magnetic sensor;
FIG. 16 is a sectional view showing the magnetic shield condition of the detecting part of the magnetic sensor;
FIGS. 17A - 17D are the illustrations of the operation principle of the magnetic sensor;
FIG. 18 is a graph showing the frequency characteristics of the output voltage in the magnetic sensor; and
FIG. 19 is a graph showing the relationship between the magnetic flux density and the output voltage in the magnetic sensor.

DETAILED DESCRIPTION OF THE INVENTION

Hereinafter, description is first given on the concept of the electric vector potential forming the base of the present invention. As the physical quantity resembling the electric vector potential, there has so far been known the magnetic vector potential. This magnetic vector potential has already been confirmed to exist by the interference experiment of the electron beam by electron holography (Phys. Rev. Lett. 48, 1443 (1982)). However, with respect to the physical quantity called the electric vector potential, its existence has never been predicted so far.

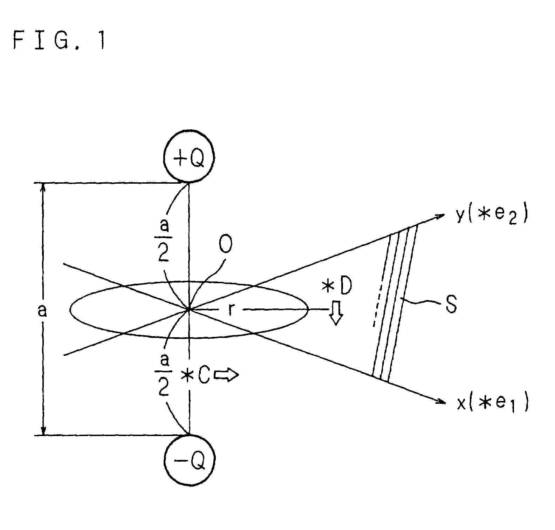

FIG. 1 is an illustration of the electric vector potential. In FIG. 1 there is shown an electric dipole in which the charged particles having the charge quantities of +Q and -Q exist by a distance a. Now, taking the orthogonal coordinate axes x and y based on the origin 0 on a plane S orthogonal with the line including the point 0 which equally divides the line connecting the two charged particles (taking the + Q side to be the z-axis direction), the electric flux density $*D$ which generates from the +Q charged particle in the position distant by the distance r from the origin 0 on the plane S (hereinafter, the vector is to be shown with the mark $*$, and the vector D is to be represented by $*D$) is such that its x-axial component $D_x$ and y-axial component $D_y$ are both zero, and there exists only the z-axial component $D_z$, so that the components $D_x$, $D_y$ and $D_z$ can be represented by the expressions (1) and (2) below.

$$D_x = D_y = 0 \tag{1}$$

$$D_z = -Q \cdot a/4\pi\{(a/2)^2 + r^2\}^{3/2} \tag{2}$$

Now, the magnetic vector potential $*A$ (hereinafter, the vector A is represented as $*A$) is defined as $*B = rot \times *A$, so that the magnetic flux density $*B$ (hereinafter, the vector B is represented as $*B$) satisfies the conditions of div $*B = 0$.

With respect to the electric vector potential $*C$ (hereinafter, the vector C is represented as $*C$) whose presence is predicted by the present inventors, when it is contrasted to the magnetic vector potential $*A$ from the analogy between the magnetism and the electricity, the following conditions are satisfied with the electric flux density $*D$, from the expressions (1) and (2):

$$\text{div } D_z = \partial D_z/\partial z = 0,$$

namely, div $*D = 0$.

Accordingly, it can be seen that the electric vector potential $*C$ can be defined as in the following expression (3) in the same manner as $*B = rot \times *A$ on the magnetic vector potential $*A$:

$$*D = rot \times *C \tag{3}$$

The electric vector potential $*C$ in the expression (3) can be obtained as follows. Namely, the expression (3) can be rewritten as in the expressions (4), (5) and (6), so that the expressions (7), (8) and (9) showing the relations corresponding to the expressions (4), (5) and (6) are satisfied.
(Math. 1)
(Math. 2)

Accordingly, the electric vector potential $*C$ can be expressed in the expression (10).

$$*C = Q \cdot a(-y*e_1 + x*e_2)/4\pi r^2\{(a/2)^2 + r^2\}^{1/2} \tag{10}$$

wherein $*e_1$, $*e_2$ are the unit vectors in the x, y orthogonal coordinate.

In case of a >> r, the electric vector potential $*C$ can be expressed simply as in the expression (11).

$$*C = Q(-y*e_1 + x*e_2)/2\pi r^2 \tag{11}$$

Now, according to Stokes' theorem on the finite plane in the vector site, the electric vector potential $*C$ requires to satisfy the expression (12) as potential.
(Math. 3)

The expression (12) can be proven as follows, if it is assumed that the electric vector potential $*C$ is for example continued in closed loop form.

Namely,
(Math. 4)

(Math. 5),

and these two become equal.

From the above, it can be seen inversely that the electric vector potential $*C$ is in continuous loop form.

This fact means that the electric vector potential $*C$ is always continuous, in other words, physically impossible to shield, physical quantity. Accordingly, it is of course possible to transfer the electric vector potential as energy, and the electric vector potential is a propagation medium having very excellent permeability as a signal medium for communication.

From the above review, with respect to the electric vector potential whose presence was predicted by the present inventors, the existence thereof has been illustrated without theoretical contradiction. In addition, in view of its characteristics, i.e., of its continuous loop form, it can be used for energy propagation medium, or for communication propagation medium to give such communication system as to allow communication even in an environment in which communication is impossible by the conventional electromagnetic wave utilized communication system, for example, under water, ground or between the inside and the outside of the space covered with conductive materials.

Next, the case where such electric vector potential is utilized as such as an energy propagation medium or a propagation medium for communication signal is considered as follows:

In the expression (13) which is Maxwell's electromagnetic equation,

$$\mathrm{rot} \times *H = *i + (\partial *D/\partial t) \tag{13}$$

In case of $*i = 0$, i.e., when the voltage only is applied to the dielectrics with the zero current, there is a relationship of $\mathrm{rot}\, *H = \partial *D/\partial t$ between the magnetic field $*H$ and the electric flux density $*D$, so that the condition becomes $*H = \partial *C/\partial t$, and it can be seen that the variation in time of the electric vector potential $*C$ directly contributes to formation of the magnetic field.

The absolute amount H of the magnetic field $*H$ becomes $H = (\partial Q/\partial t)/2\pi r$, in which the magnetic field $*H$ decreases in inverse proportion to the distance r from the center of the electric dipole. Therefore, in order to raise the level of the electric vector potential $*C$, in other words, to increase the magnetic field $*H$ through the generation of the electric vector potential $*C$, the $\partial Q/\partial t$ amount may be taken in a large amount.

In addition, effect of the earth magnetism may be considered. Against the fact that this is a static magnetic field, the magnetic field by electric vector potential fluctuates (oscillating magnetic field), and therefore the identification can be easily made.

Next, using a dielectric bar, the concept of the electric vector potential will be further illustrated.

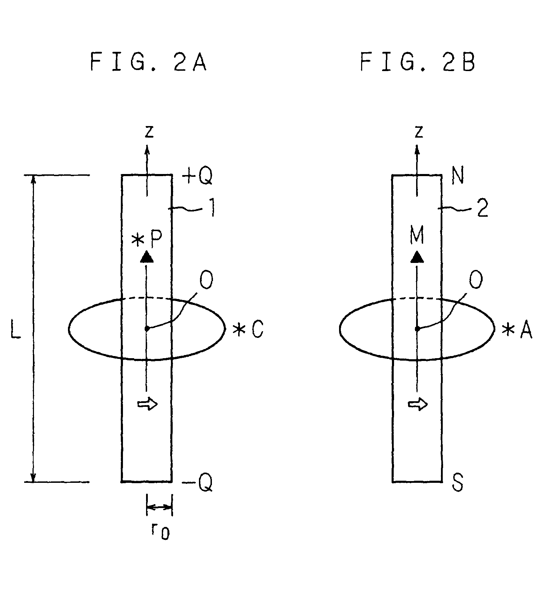

FIG. 2A shows a slender columnar polarized dielectric bar 1, and FIG. 2B shows likewise a columnar permanent bar magnet 2. In FIG. 2A, the radius $r_0$ in the columnar dielectric bar 1 is to be sufficiently small in comparison with the axial length L thereof ($r_0 << L$), and assuming the cross-sectional area thereof to be S, and to have the polarized charges of +Q and -Q at both ends, there are obtained the distributions of the inner and outer electric fields and flux densities of the dielectric bar 1 based thereon. The axial direction of the dielectric bar 1 is taken as z-axial direction, and on the plane including the upper and lower 1/2 mid-point 0 and orthogonal with the z-axis, the x-axis and y-axis are taken as the orthogonal coordinate.

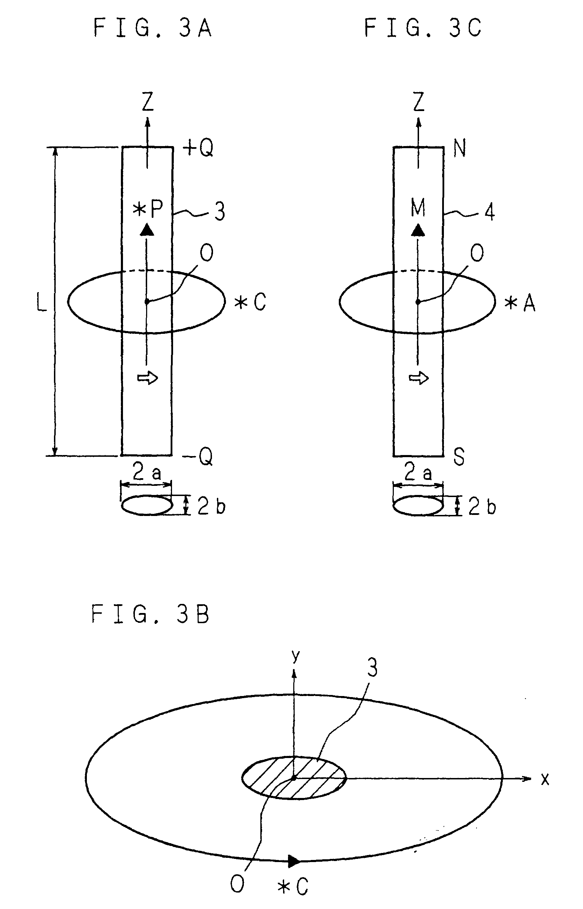

FIG. 3A shows a polarized elliptical columnar dielectric bar 3, FIG. 3B shows a section of the dielectric bar 3 including its upper and lower 1/2 points 0, and FIG. 3C shows likewise an elliptical columnar permanent bar magnet 4. Now, with respect to the slender polarized elliptical columnar dielectric bar 3 as shown in FIG. 3, assuming the elliptical long radius to be a, the short radius to be b, the length to be L ($L >> a, b$), and the cross-sectional area to be S ($= \pi ab$), and to have the polarized charges of +Q and -Q at both ends, there are obtained the distributions of the inner and outer electric fields and flux densities of the dielectric bar 3 based thereon. The axial direction of the dielectric bar 3 is taken as z-axial direction, and on the plane including the upper and lower 1/2 mid-point 0 and orthogonal with the z-axis, the x-axis and y-axis are taken as the orthogonal coordinate.

Assuming that each of the dielectric bars 1, 3 is uniformly polarized in the axial direction, and its electric polarization vector is $*P$, the external and internal electric flux densities $*D$ and electric fields $*E$ at the upper and lower central positions of the dielectric bars 1, 3 can be represented by the expression (14) in the case of the columnar dielectric bar 1, and by the expression (15) in the case of the elliptical columnar dielectric bar 3.

(Math. 6)

(Math. 7)

wherein, since the absolute value of the electric polarization vector $*P$ is $P = Q/S$, the external and internal electric flux densities $*D$ are represented by the expression (16) in the case of the columnar dielectric bar 1, and by the expression (17) in the case of the elliptical columnar dielectric bar 3.

(Math. 8)

(Math. 9)

On the other hand, as shown in FIG. 2B and FIG. 3C, the magnetic flux density $*B$ on the plane orthogonal with the z-axis including the upper and lower 1/2 mid-point 0 by the slender permanent bar magnets 2, 4 having the center axes on the z-axis is represented as the expression (18) by the magnetic vector potential $*A$.

$$*B = rot \times *A \qquad (18)$$

Therefore, in coordination with the above, in view of the analogy between the magnetism and the electricity, the electric flux density $*D$ can be represented by the expression (19) in coordination with the expression (18) by the electric vector potential $*C$.

$$*D = rot \times *C \qquad (19)$$

From the expression (16) or (17) and (19), the electric vector potential $*C$ can be represented by the expression (20) in the case of the columnar dielectric bar 1, and by the expression (21) in the case of the elliptical columnar dielectric bar 3.
(Math. 10)
(Math. 11)

In the expressions (20) and (21), x and y represent the planar coordinate of the plane resulting from the vertical division of a bar into two equal parts, and $*e_1$, $*e_2$ represent respectively the unit vectors in the orthogonal coordinate.

It can be seen from the above that, in the plane not including the electric charge, namely, in the plane resulting from the division of the dielectric bar 1, 3 into two equal parts up and down, the electric flux density $*D$ can be represented by the electric vector potential $*C$ as in the expression (19). On the other hand, it can be seen that the expression (19) is re-written in the form of a line integral of $*C$ as shown in the expression (22) from Stokes' theorem and the line integral of the electric vector potential $*C$ represents the electric charge quantity Q.
(Math. 12)

Satisfaction of the expression (22) can be readily ascertained by substituting $*D$ of the expression (16) or (17) and $*C$ of the expression (20) or (21) into the expression (22), respectively.

That is to say, in the neighborhood of the centers of the electrically polarized dielectric bars 1, 3, the electric flux density $*D$ is in parallel with the z-axis as in the magnetic flux density $*B$, so that the continuous circular or elliptical electric vector potential $*C$ as shown in FIG. 2A or FIGS. 3A, 3B, is present in circular or elliptical styles in reflection of the sectional shapes of the dielectric bars 1,3 on the outside of the dielectric bars 1,3. In other words, in order to satisfy the Stokes' theorem, the electric vector potential $*C$ is required to be always continuous, and accordingly it becomes impossible to shield it physically, and it becomes a signal of very good permeability as a communication medium. In case the electric vector potential $*C$ is elliptical in shape, when the anisotropy of distribution of the electric vector potential $*C$ is positively utilized, it becomes possible to propagate the electric vector potential $*C$ over a long distance at a low output.

Next, study is made as to whether such electric vector potential $*C$ can be an electromagnetically observable physical quantity or not. The expression (23) is Maxwell's electromagnetic equation on the magnetic field $*H$ and the electric flux density $*D$:

$$rot \times *H = *i + \partial *D/\partial t \qquad (23)$$

In case there is no current density $*i$, the above expression can be represented as in the expression (24).

$$rot \times *H = \partial *D/\partial t \qquad (24)$$

Furthermore, when $*D$ of the expression (19) is substituted into the expression (24), the expression (25) can be derived using a gauge function $grad \cdot \phi$.

$$*H = \partial *C/\partial t + grad \cdot \phi \qquad (25)$$

It can be seen from the expression (25) that the amount of time-derivative of electric vector potential $*C$ is directly associated with the magnetic field $*H$.

As described above, in the region in which the current density $*i = 0$, i.e., in the region in which neither current nor charge exists, the gauge function can be made grad $\cdot \phi = 0$ by applying the radiation gauge, so that the expression (25) can be represented as the expression (26), and it can be seen that the time-derivative of the electric vector potential $*C$ directly gives the magnetic field $*H$.

$$*H = \partial *C/\partial t \tag{26}$$

From the above, the absolute value H of the magnetic field $*H$ which is observed through the time variation of the electric charge quantities at both ends of the columnar dielectric bar 1 can be represented by the expression (27) by substituting the external electric vector potential $*C$ of the expression (20) into the expression (26).

$$H = (\partial Q/\partial t)/2\pi r \tag{27}$$

The magnetic field $*H$ which is observed through the time variation of the electric charge quantities at both ends of the elliptical columnar dielectric bar 3 can be represented by the expression (28) by substituting the external electric vector potential $*C$ of the expression (21) into the expression (26).

$$*H = (\partial Q/\partial t)(-y*e_1 + x*e_2)/2\pi (x^2/a^2 + y^2/b^2)ab \tag{28}$$

Accordingly, the magnetic field strength observed on the receiving side is lowered in inverse proportion to the distance r in the case of the columnar dielectric bar 1 from the expression (27), and is lowered approximately in inverse proportion to the distance in the case of the elliptical columnar dielectric bar 3 from the expression (28). Accordingly, by setting the amount of $\partial Q/\partial t$ as large as possible, far distance communication is feasible.

The present inventors studied the sending device in the communication system which utilizes the thus defined electric vector potential, and as a result came to conceive a capacitor type sending device in which the induced charge is amplified in case the voltage is applied instead of the electrically polarized dielectric bar. And, in the course of the experiment and study on the sending device and receiving device in the communication system, the inventors came to know the following facts:

(1) When the thin dielectric slab with high relative dielectric constant is interposed between the two metal electrode plates with the parallel plate form and a frequency-modulated voltage is applied to the dielectrics, an electric vector potential having relatively high level corresponding to the modulated frequency is generated, even if the applied voltage or frequency is lowered.

(2) By making the configuration of the dielectrics in the direction vertical to the applied voltage elliptical column or rectangular parallelepiped plate form, the electric vector potential to be propagated in the long diameter or long side direction is less apt to show loss in its signal strength.

(3) As the receiving device, by using a high sensitive magnetic sensor capable of detecting a dim magnetic field, observation of oscillating magnetic field by the modulated electric vector potential is possible even at a sufficiently distant place. That is to say, it is possible to observe the current excited in the magnetic sensor because of the magnetic field. As a result, by using a high sensitive magnetic sensor as the receiving device, sending/receiving by the electric vector potential is feasible even when a low voltage or a voltage of low frequency is applied in the sending device.

The energy propagation system of the present invention using an electric vector potential as energy propagation medium will be illustrated herebelow.

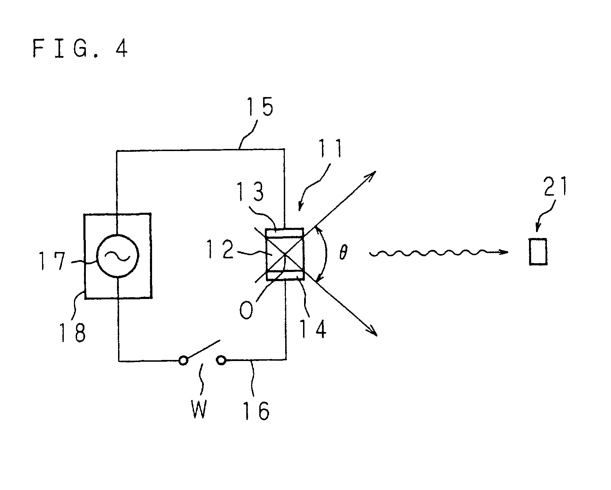

FIG. 4 is a schematic diagram showing the constitution of an example of the energy propagation system of the present invention. In the figure, the part 11 denotes an energy sending apparatus, and 21 shows an energy receiving apparatus. The energy sending apparatus 11 has a constitution of electrodes 13, 14 provided on both sides of dielectrics 12 (this corresponds to a capacitor in construction, and to be called a capacitor hereinafter) as a constitution corresponding to the electric dipole used in the illustration of the above electric vector potential. Each end of lead wires 15, 16 is connected to the electrodes 13, 14, and the other end to a control unit 18 including an alternating current power source 17. A switch W is interposed in the lead wire 16. By turning this switch W on, adjusted alternating current voltage V of predetermined frequency f is to be applied to the dielectrics 12 through the electrodes 13, 14 from the alternating current power source 17 according to the control by the control unit 18.

The control unit 18 is designed to change the oscillating voltage to be applied to the dielectrics 12, concretely the alternating current voltage V, and frequency f, and to apply the alternating current voltage to the dielectrics 12 from the alternating current power source 17 intermittently, change the electric vector potential to be sent to large and small extent, and intermittent, so that the energy can be propagated to the energy receiving apparatus 21.

The dielectrics 12 which constitutes the capacitor of the energy sending apparatus 11 is formed in a plate form of a column (thickness a) with the material of PLZT or the like. Its material quality (dielectric constant $\varepsilon$), sectional area S (sectional area in the direction parallel with the electrodes 13, 14 or sectional area in the orthogonal direction therewith), thickness (corresponding to the size between the electrodes 13 and 14), configuration (besides columnar, rectangular parallelepiped form), and the like may be appropriately set. Further, the alternating current voltage V (= $V_0 \sin\omega t$) to be applied to the dielectrics 12 from the alternating current power source 17 and the frequency f ($\omega = 2\pi f$) are not particularly limited. Their amounts may be set to the levels higher than the amounts at which the electric vector potential can be generated and to satisfy the expression (29) or (30) in consideration of the propagation distance r, sensitivity of the energy receiving apparatus 21, and the like.

The expression (29) is a conditional expression on the time-derivative $\partial Q/\partial t$ of the charge quantity Q.

$$\partial Q/\partial t = \varepsilon\, SV_0\, 2\pi f\, \cos\omega t/a \qquad (29)$$

The expression (30) denotes the absolute amount H of the magnetic field ∗H in the distance r from the point 0 on the plane S including the point 0 of two equal division of the dielectrics 12.

$$H = \varepsilon\, SV_0\, f\, \cos\omega t/a \cdot r \qquad (30)$$

The absolute value B of the magnetic flux density ∗B can be given by the expression (31) by using the expression (30), since $B = \mu_0 H$ ($\mu_0$ is a vacuum permeability).

$$B = \mu_0\, \varepsilon\, SV_0\, f\, \cos \cos\omega t/a \cdot r \qquad (31)$$

The magnetic flux density of this magnetic field is to be detected by the magnetic sensor which is the energy receiving apparatus 21.

As will be apparent from the expression (31), the magnetic flux density becomes large as the frequency f and voltage $V_0$ are elevated. Accordingly, by elevating them, detectable magnetic field strength can be obtained. However, if the frequency f is excessively elevated, the electromagnetic wave is radiated, and if the generated magnetic field becomes excessively large, the effect on the peripheral apparatuses is large to give a cause for erroneous operation, and ill effect on human body is also conceivable. Therefore, in order to prevent radiation of electromagnetic wave, the energy sending apparatus 11 is desirably covered wholly with a metal cylinder or the like, and the generated magnetic field is desirably kept in about several tens of milligauss.

On the other hand, the energy receiving apparatus 21 may be so constituted as a magnetic sensor, and provided with a coil for inducing the current coordinate with the change of the magnetic flux density, a power source for energizing the coil and a current sensor to detect the current of the coil, and the like, so that the apparatus can detect the above magnetic field ∗H or magnetic flux density ∗B, and convert it into the current or voltage to obtain an output signal coordinate with the magnetic flux density. For this purpose, the commercialized high sensitivity magnetic sensor (e.g., one using Hall element, current type one, SQUID system, etc. each capable of detecting about 5μG) may be used as such.

However, in case the energy receiving apparatus 21 is likely to observe the magnetic field by electromagnetic waves generated from peripheral apparatuses to cause the resultant lowering of S/N ratio, it is desirable to make magnetic shielding around the energy receiving apparatus 21 (magnetic sensor) with a soft magnetic metal or with a material containing the same.

The operation of the energy propagation system having such constitution will be explained. The switch W is turned on, and the alternating current voltage of frequency f and voltage V set by the control unit 18 from the alternating current power source 17 is applied to the dielectrics 12 through the electrodes 13, 14. By this step, an electric vector potential is sent out from the dielectrics 12 of the energy sending apparatus 11 within the range of the angle θ surrounded by the two diagonal lines and propagated to reach the energy receiving apparatus 21. The energy receiving apparatus 21 is kept in a condition of electrically active to the coil. By this step, when the electric vector potential is reached, by the accompanied change of the magnetic flux density, current is induced to the coil, and the current running in the coil shows change. This change is detected by the current sensor, and the current amount induced to the coil or the amount corresponding to the output of the current sensor becomes the receiving energy.

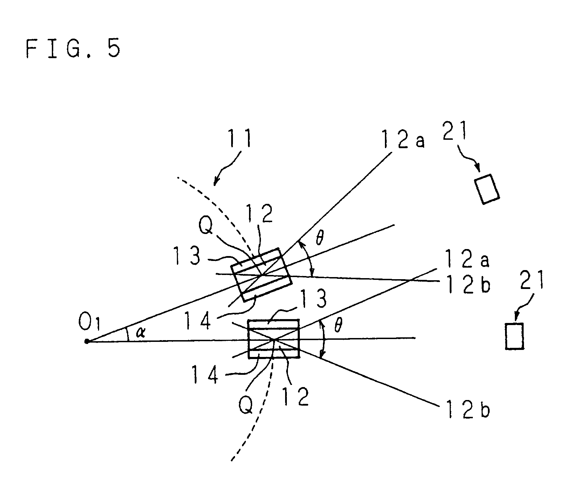

FIG. 5 is a schematic diagram showing the constitution of other example of the energy propagation system of the present invention. In FIG. 5, the same parts as those of FIG. 4 are represented by the same numbers. In this example, there are used a plurality of capacitors made by providing the electrodes 13, 14 on both opposed sides of the dielectrics 12, and these capacitors are arranged radially in such pose that the lateral sides of the dielectrics 12 not provided with the electrodes 13, 14 are oriented outward over nearly more than half circumference on the same plane centering on the point $0_1$. From each capacitor, the electric vector potential is generated to propagate in the direction of the angle θ holding the crossing point Q of the diagonal lines 12a, 12b which connect the opposed diagonal two points in plan view in their dielectrics 12. Therefore, in order to cover the whole directions, plural capacitors may be posted so that the mutual holding angle α around the center $0_1$ over the range of more than about half the circumference becomes the proper amount.

The constitutions of the lead wires 15, 16, alternating current power source 17, control unit 18 and switch W accompanying each capacitor are the same as those of the above example (FIG. 4). The alternating current power source 17, control unit 18 and switch W may be provided in the unit of each capacitor, but they may be arranged to be commonly used by the capacitors. In case of severally providing, there is a merit of generating the electric vector potentials of different levels by the individual electric vector potential unit. In case of the common use, there is a merit of making it possible to expect simplification of constitution.

Now, according to the above expression (31), in order to make the alternating current voltage to be applied low frequency and low level while maintaining the same magnetic field strength, it is advisable to use dielectrics having high relative dielectric constant ($\varepsilon/\varepsilon_0$, $\varepsilon_0$: vacuum dielectric constant), and to make the thickness a of the dielectrics thin and the area S large. To make the applied voltage low frequency and low level is advantageous in weakening the radiated electromagnetic wave, decreasing the charge quantity induced to the metal shielding the capacitor and lead wire, and making the provision of earth unnecessary. However, when the thickness of the dielectrics is thinned, the distribution of the electric vector potential becomes two dimensional (directivity becomes strong).

In view of the above, it is desirable to make the thickness of the dielectrics 12 normally less than 5 mm, and the relative dielectric constant more than 500, and to set such capacitors radially. By so arranging, the charge quantity induced on the shield material and the like is reduced to make the earth unnecessary, weight reduction can be expected to provide facility of portability, and propagation of electric vector potential in all directions can be secured.

In this embodiment, when the switch W is turned on and the alternating current voltage of frequency f and voltage V set by the control unit 18 is applied from the alternating current power source 17 to the dielectrics 12 through the electrodes 13, 14, an electric vector potential is sent out from the dielectrics 12 of the energy sending apparatus 11 within the range of the angle θ surrounded by the two diagonal lines 12a, 12b as shown in FIG. 5 and propagated to reach the energy receiving apparatus 21. The operation in each energy receiving apparatus 21 is same as that of the example shown in FIG. 4.

Examination was made on the angle dependency of the magnetic field strength in the case where the capacitors constituted by using the dielectrics having the relative dielectric constant of 5000 and thickness of 1.0 mm are radially arranged as shown in FIG. 5. Measurements were made on a capacitor contained in an earth constituted by Permalloy cylinder (outer diameter: 82 mm, inner diameter: 80 mm, length: 30 mm, wall thickness : 1 mm) regarding the cases where the radiated electromagnetic wave was shielded and the case it was not shielded. Also, magnetic flux density was measured with the magnetic sensor with its whole detecting part covered with Permalloy and with variation of the voltage V and the frequency f. The measuring distance was the distance from the center $0_1$ of the radial arrangement. Measurement of the background magnetic field was effected with rotation of the magnetic sensor by 90 degrees and inclination in the direction orthogonal with the direction of propagation of the electric vector potential. With respect to the judgment on the propriety or not of the S/N ratio, the result was judged to be passable when the ratio of measured magnetic field to the background magnetic field exceeded 10, and to be rejected when it was less than 10. The measuring angle θ (deg) was the angle to the face orthogonal with the direction of application of the voltage after passing through the center Q of the dielectrics. The experiment results are shown in Table 1.

As apparent from Table 1, it is observable that when a plurality of capacitors are radially arranged, anisotropy of distribution of the electric vector potential becomes smaller to give sufficient strength of the measured magnetic field even when the measuring angle is enlarged, and that it is an excellent communication system in the aspect of the communication by electric vector potential in nearly the same way as the conventional electromagnetic wave.

Hereinafter, the communication system of the present invention using the electric vector potential as a signal propagation medium will be illustrated.

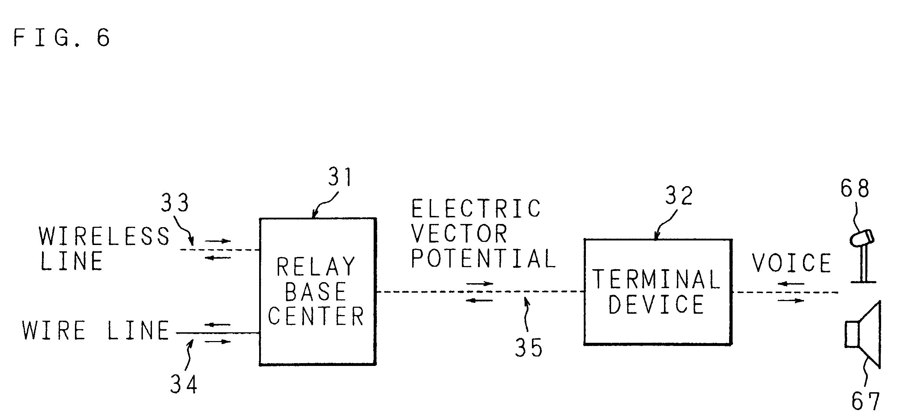

FIG. 6 is a schematic diagram showing the summary of the communication system of the present invention. In the figure, the part 31 denotes a relay base center, and 32 a terminal device. The area between the relay base center 31 and the terminal device 32 is for example the region where the radio obstacle occurs or the place where the laying of wire line is difficult. In the relay base center 31 there are provided a bi-directional wireless line 33 using the electromagnetic waves (including light) and a wire line 34 such as telephone for communication with external source including other base centers. The relay base center 31 is also provided with a bi-directional wireless line 35 using an electric vector potential between the terminal device 32.

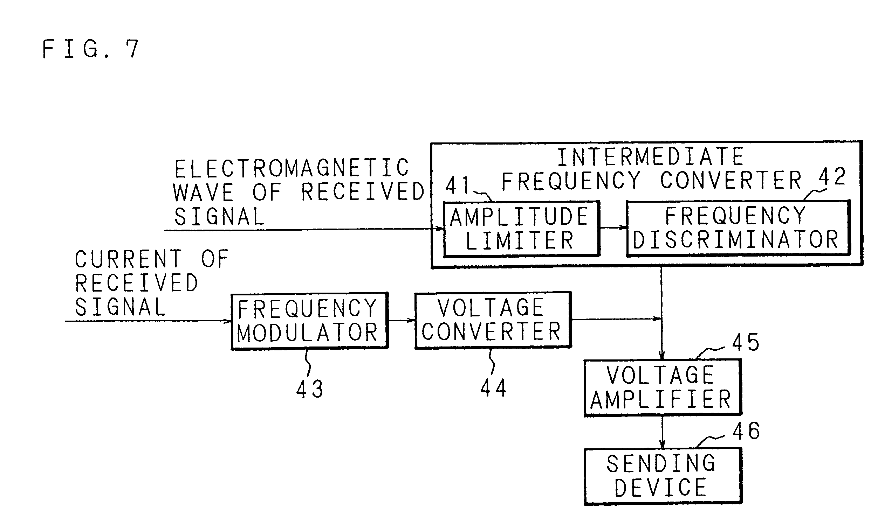

FIG. 7 is a block diagram showing the principal equipment in the relay base center 31. The signal electromagnetic wave (including the optical signals) propagated through the wireless line 33 from other base center at first undergoes limitation of amplitude by an amplitude limiter 41, filtration of the high frequency range by a frequency discriminator 42, amplification by a voltage amplifier 45 as a voltage signal lowered to the predetermined frequency, and inputted to a sending device 46 utilizing the electric vector potential. The signal current transmitted through the wire line 34 is first frequency modulated by a frequency modulator 43, then converted to a voltage signal by a voltage converter 44, amplified by the voltage amplifier 45, after which it is inputted to the sending device 46 which utilizes the electric vector potential as propagation medium. By this sending device 46 the communication by electric vector potential is carried out with the terminal device 32.

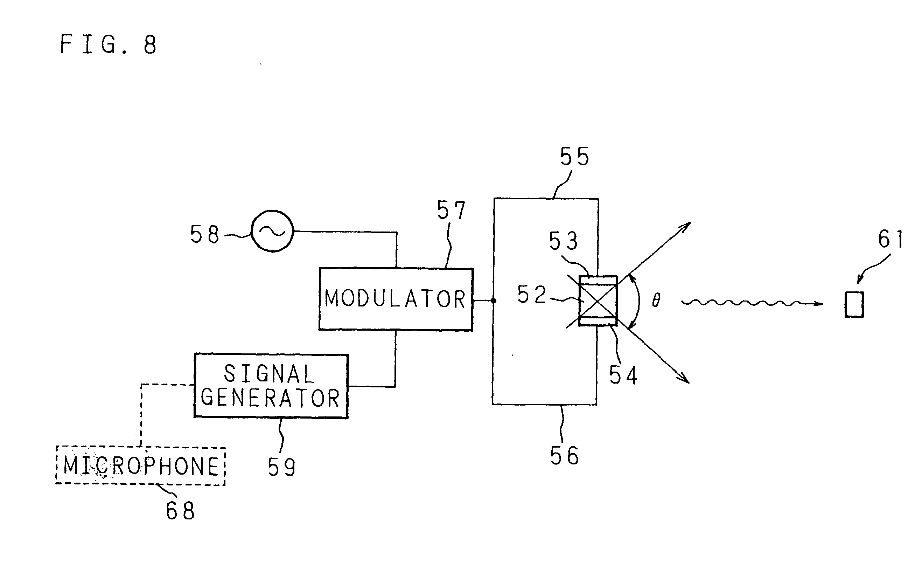

FIG. 8 is a schematic diagram showing the constitution of the sending device 46. The sending device 46 is made of PLZT or the like as a material (with relative dielectric constant of more than 500), with which a dielectrics 52 is formed in plate form (thickness no more than 5 mm) of columnar, elliptical columnar, or rectangular parallelepiped, and on the opposed two faces of the dielectrics 52 copper-made electrodes 53, 54 are joined to fix by silver paste or the like to form a capacitor, then to the electrodes 53, 54 of the capacitor one end each of the lead wires 55, 56 is connected, with each of the other end thereof connected to a modulator 57, and the modulator 57 connected to an alternating current power source 58 and a signal generator 59. The modulator 57 is operated to regulate the alternating current voltage from the alternating current power source 58 corresponding to the signal from the signal generator 59 and subject its frequency to AM modulation, or FM modulation, or PCM, for example, pulse width modulation, to apply it to the dielectrics 52. By this step, the electric vector potential to be sent out from the capacitor is varied in large or small degree, or in intermittent manner (pulse form).

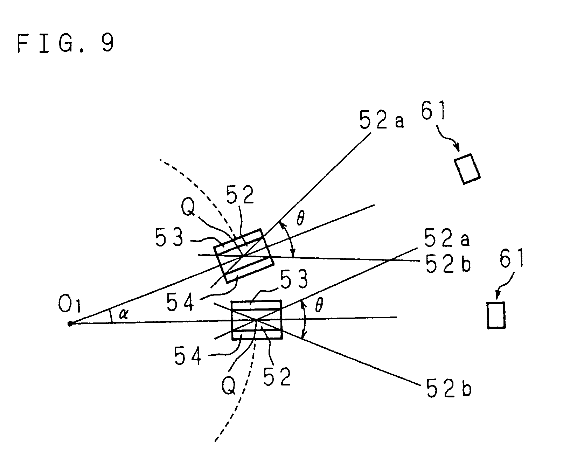

In the drawing there is shown a case provided with a single capacitor. However, as the propagation direction of the electric vector potential to be generated therefrom is limited to the range of the angle θ held between the two diagonal lines the dielectrics 52, in order to cover all the directions it is desirable to arrange a plurality of capacitors with the lateral sides of the dielectrics 52 not provided with the electrodes 53, 54 directed outward radially, over nearly more than the semi-circular range centering on the point $0_1$, as shown in FIG. 9. In this case, each capacitor is connected to the modulator 57 in parallel way.

Furthermore, the relay base center 31 is provided with the equipment to detect the magnetic field formed by the electric vector potential generated and propagated from the terminal device 32, convert it into the signal electromagnetic wave for the wireless line 33 (including the optical signal) or the signal current for the wire line 34 and transmit it.

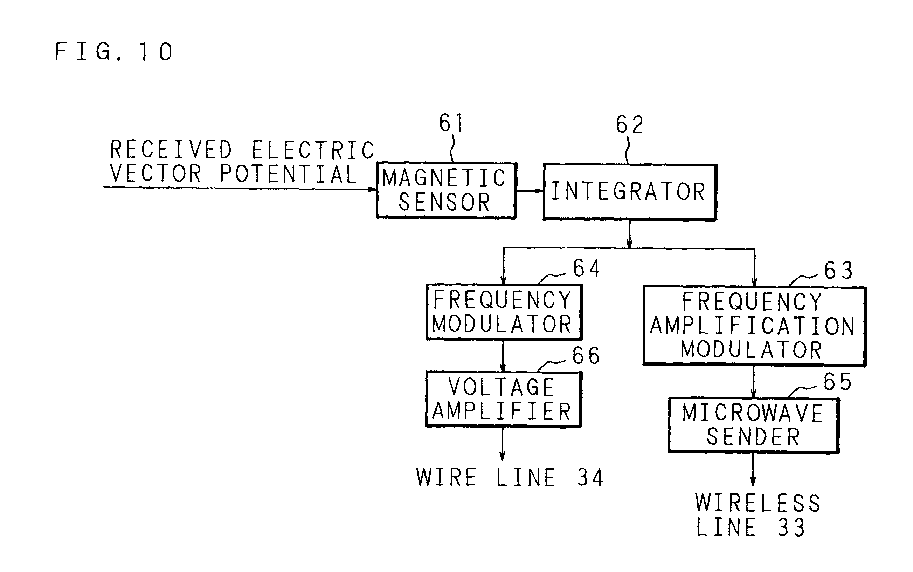

FIG. 10 is a block diagram showing the other sending and receiving equipment installed in the relay base center 31. In the drawing, the part 61 is a magnetic sensor for detecting the magnetic field formed by the propagated electric vector potential. The magnetic sensor 61 detects the oscillating magnetic field by the electric vector potential and outputs the electric current corresponding thereto. As this output current is a differential value of the electric vector potential, in order to integrate and revert it to the original signal, it is outputted to an integrator 62. The integrator 62 integrates the current, and outputs the integrated amount to a frequency amplification modulator 63 and a frequency modulator 64. The frequency amplification modulator 63 carries out frequency amplification and outputs to a microwave sender 65, from where it transmits the microwave through the wireless line 33. The frequency modulator 64 lowers the frequency of the integrated value, after which it amplifies it with a voltage amplifier 66 and transmits it externally through the wire line 34.

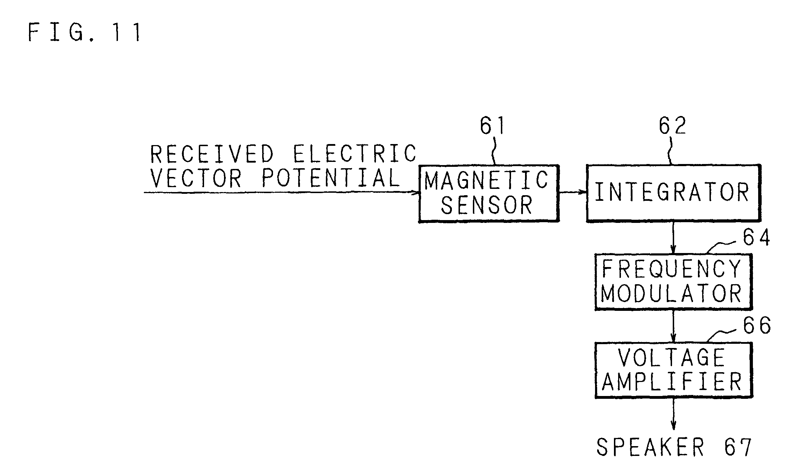

On the other hand, the terminal device 32 is equipped with a sending device of the electric vector potential as shown in FIG. 8 and a receiving device as shown in FIG. 11. The receiving device time-integrates the output of the magnetic sensor 61 by the integrator 62 and lowers the frequency of the integrated value by the frequency modulator 64, after which the amount is amplified by the voltage amplifier 66 and connected to a speaker 67. The sending device has substantially the same constitution as the signal generator 59 shown in FIG. 8 with connection of for example a microphone 68, being so made as to permit sending by voice through the microphone 68.

By this contrivance, the user can receive the transmission signal as voice, and also can make signal sending by voice signal through the terminal device 32.

As shown in FIG. 6, by setting a sending/receiving device using the electric vector potential, a sending/receiving device using the electromagnetic wave (including light) by the wireless line 33, or a sending/ receiving device of the wire line 34 on the relay base center 31, and further setting a sending/receiving device with which bi-directional conversion to electric vector potential and voice has been made possible on the terminal device 32, it becomes possible to make bi-directional communication by electric vector potential between the relay base center 31 and the terminal device 32, and moreover, by connecting the relay base center 31 with the conventional wireless line 33 or wire line 34, there is an advantage that it becomes possible to make communication in good S/N ratio even in a place having communication obstacle which is the weak point of the conventional communication system, and further radio obstacles by interference are greatly alleviated. Moreover, because the magnetic field to be observed is an alternating magnetic field, there is a merit that the effect of the static magnetic field such as global magnetic field can be utterly neglected.

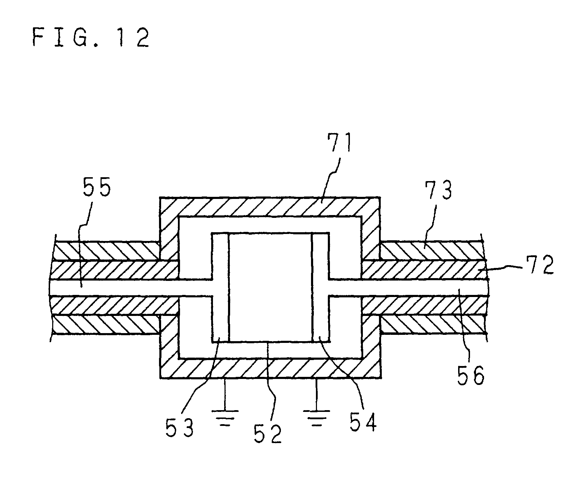

FIG. 12 is a schematic sectional view showing the concrete constitution of the sending device in the relay base center 31 and the terminal device 32. The dielectrics 52 is formed in columnar style (sectional area S, thickness a, dielectric constant $\varepsilon$) with the material of PLZT or the like. With respect to the material quality, relative dielectric constant, and configuration of the dielectrics 52, without specifically limited to the one exemplified above, in respect to the material quality, barium titanate is also usable, as to the configuration, elliptical columnar, rectangular parallelepiped, or cubic style may be usable. The relative dielectric constant may be within the range of 500 to 10000.

In order to shield the electromagnetic waves radiated from the dielectrics 52, one or plural capacitors are wholly stored in a cylinder 71 made of Permalloy which is a soft magnetic metal, including the part of the lead wires 55, 56. In case of providing a plurality of capacitors, under the condition that the plural numbers of capacitors are arranged along the arc with the face not provided with the electrodes 53, 54 directed outward, the plural capacitors are stored in the cylinder 71.

With respect to the portions of the lead wires 55, 56 drawn outside the cylinder 71, their surroundings are electromagnetically shielded with an insulator 72, and further outside thereof with a Permalloy-made pipe 73, so that they are doubly electromagnetically shielded.

Assuming that a voltage of the maximum voltage of Vo in the frequency f is applied between the electrodes 53, 54 of the dielectrics 52 of the sending device, in case of $\omega = 2\pi f$, the voltage V to be applied to the dielectrics 52 can be represented by the expression (32).

$$V = V_0 \sin\omega t \qquad (32)$$

Accordingly, the time-derivative $\partial Q/\partial t$ of the electric vector potential (charge quantity) is represented by the expression (33).

$$\partial Q/\partial t = \varepsilon \, SV_0 \, 2\pi f \cos\omega t/a \qquad (33)$$

The magnetic field H to be generated at a distance r from the center axis in the plane equally divided into two parts between the electrodes 53, 54 of the columnar dielectrics 52 can be given by the expression (34) from the expression (27).

$$H = \varepsilon \, SV_0 \, f \cos\omega t/ar \qquad (34)$$

On the other hand, because the magnetic field to be observed by the magnetic sensor 61 is a magnetic flux density, from the relative expression of $B = \mu_0 H$, the above expression can be re-written as in the expression (35). This magnetic flux density B is to be observed by the magnetic sensor 61.

$$B = \mu_0\varepsilon \, SV_0 \, f \cos\omega t/ar \qquad (35)$$

Accordingly, in order to make it possible to send an electric vector potential at a high output even when the voltage to be applied is low, there is used a dielectrics 52 whose thickness is thin, and whose relative dielectric constant is high.

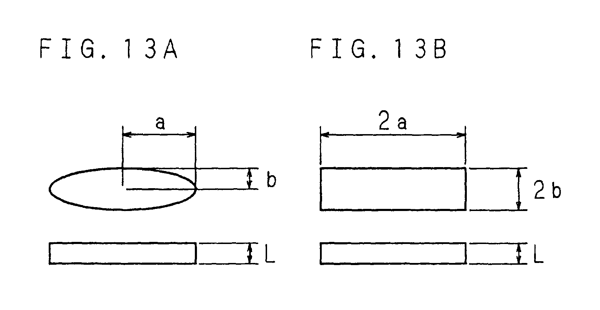

Examples of other configurations (elliptical columnar, rectangular parallelepiped) of the dielectrics 52 which constitutes the capacitor will be illustrated. FIG. 13A is schematic plan view and side view showing the elliptical columnar (long radius a, short radius b, thickness L) dielectrics 52; and FIG. 13B is schematic plan view and side view showing the rectangular parallelepiped (long side 2a, short side 2b, thickness L) dielectrics 52.

In the elliptical columnar dielectrics 52 shown in FIG. 13A, the ratio of its long radius a to short radius b is set to be more than 4:1, and in the rectangular parallelepiped dielectrics 52 shown in FIG. 13B, the ratio of its long side 2a to short side 2b is likewise set to be more than 4:1, and they are set as shown in FIG. 9 with the directions of their long radius or long side to be respectively radially inward and outward.

Since the measured magnetic field strength by propagation of the generated electric vector potential is proportional to the square of the aspect ratio (a/b), when viewed from the point of the measured magnetic field strength, the configuration of the dielectrics 52 is desirably as near as possible to the bar shape, but from the viewpoint of keeping the amounts of applied voltage and frequency low, the configuration is desirably elliptical columnar or rectangular parallelepiped. Also, to set the ratio of the long radius to the short diameter or the ratio of the long side to the short side to be more than 4:1 is due to the following reasons.

As the alternating current voltage V to be applied to the dielectrics 52 can be expressed by the above expression (32), the time-derivative of the electric vector potential (charge quantity) $\partial Q/\partial t$ is represented by the expression (36):

$$\partial Q/\partial t = \varepsilon \; SV_0 \; 2\pi f \; \cos\omega t/L \qquad\qquad (36)$$

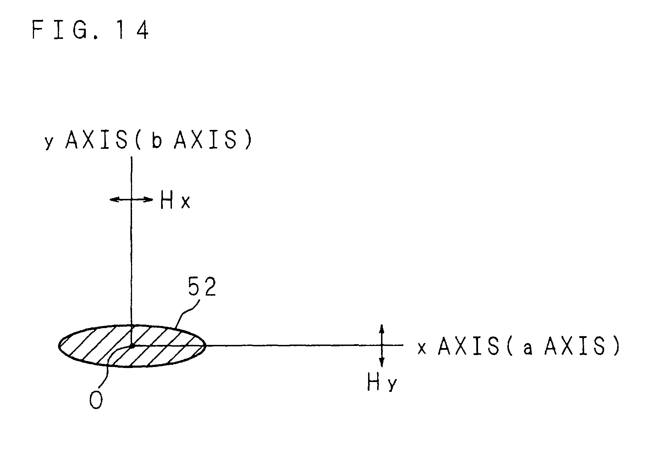

Accordingly, the x, y components of the magnetic field $*H$ generated in the position (x, y) as shown in FIG. 14 (with the long axial direction of the elliptical shape of the dielectrics 52 to be x-axis, and the short axial direction to be y-axis) can be represented by the expression (37) by substituting the expression (36) into the above expression (28). FIG. 14 is an illustration showing the direction of oscillating magnetic field (concept against the static magnetic field which is earth magnetic field) caused by the propagation of the electric vector potential from the elliptical columnar dielectrics 52.

(Math. 13)

Since the magnetic field observed by the magnetic sensor 61 in the receiving device is a magnetic flux density, from the relative expression of $*B = \mu_0*H$, the expression (37) can be represented by the expression (38).

(Math. 14)

where, the x, y components of the magnetic flux density on the x-axis (a-axis) and the y-axis (b-axis) can be represented by the expression (39) on the x-axis, i.e., as y = 0, and on the y-axis, i.e., as x = 0.

(Math. 15)

Accordingly, in order to make the applied voltage low frequency or low level, it is recommended first to use a dielectrics 52 having high relative dielectric constant, and to make the thickness L of the dielectrics 52 as thin as possible, and further to make the ratio of the long radius (or long side) to the short radius (or short side), i.e., the ratio of a/b, large, thereby making it possible to enlarge the y component of the magnetic flux density on the x axis and increase the magnetic field strength to be observed on the x axis.

As reviewed above, provision of anisotropy by direction to the configuration of the dielectrics 52 leads to various advantages such that the applied voltage can be of lower frequency and lower level, the radiated electromagnetic wave is weakened to improve the sending efficiency of the electric vector potential, and the charge quantity induced to the metal which shields the capacitor and lead wire is decreased, provision of earth becomes unnecessary, and reduction in weight provides a possibility of portability of the sending device.

In order for the receiving devices in the relay base center 31 and in the terminal device 32 to detect as far as possible only the magnetic field by the signal of the electric vector potential and exclude the leaking magnetic field from other apparatus and thus to improve the S/N ratio, there is used as the magnetic sensor 61 a high sensitivity magnetic sensor magnetically shielded by various kinds of soft quality magnetic materials.

As the object of detection by the magnetic sensor 61 is the change of the magnetic flux density by the time-variation of the electric vector potential, any magnetic sensor of whatever operating principle may be used such as Hall element, magnetic resistance element, or SQUID element, provided that it can detect the oscillating magnetic field in high sensitivity to about $5\mu G$, and it is not limited to the parallel flux gate type about which detailed description is given below as an example. However, in any magnetic sensor of any operating principle, in observing the electric vector potential, there is a likelihood of detecting the magnetic field by the electromagnetic wave generated from various peripheral apparatuses to cause the resultant lowering of S/N ratio. Accordingly, it is necessary to make magnetic shielding of the detecting part with a soft magnetic metal or material containing the same. Thus, the magnetic shielding of it is indispensable for the observation of the electric vector potential.

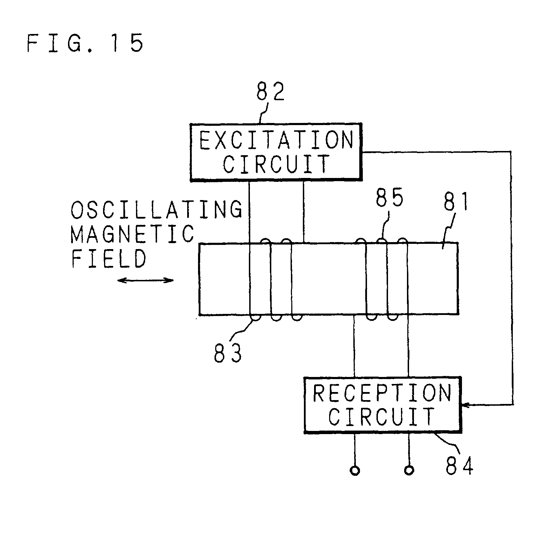

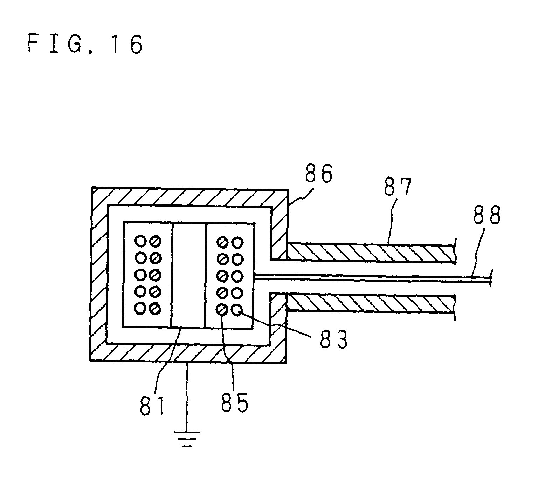

FIG. 15 is a brief constitution view of the detecting part of the parallel flux gate type magnetic sensor which is an example of the magnetic sensor 61, and FIG. 16 is a sectional view showing the magnetic shield condition of the detecting part. A core 81 comprising a bar-form soft magnetic member having high permeability is set on the detecting part in parallel with the magnetic flux of the oscillating magnetic field by electric vector potential. On the core 81 there are wound an exciting coil 83 whose both ends are connected to an excitation circuit 82 and a detection coil 85 whose both ends are connected to a reception circuit 84. The surroundings of the detecting part of the magnetic sensor 61 are covered with a shield box 86 made of a soft magnetic material which efficiently absorbs the oscillating magnetic field, and a lead wire 88 is led through a shield pipe 87 made likewise of a soft magnetic material.

As this shield material, basically, selection may be made of the material having high shield effect to meet the frequency of the oscillating magnetic field. In case of shielding by reflecting the electromagnetic wave, a metal soft magnetic member is suited, and in case of shielding by absorbing the electromagnetic wave, a soft ferrite having high absorbing efficiency is suited. Further, in order to make shielding in the wider frequency band, these materials may be used in combination and the shielding effect is improved. In any case, the shielding material need not be specifically limited to the soft magnetic material, provided that the magnetic shielding is effected with a material which is easy to reflect the electromagnetic wave or with a material which is easy to absorb the electromagnetic wave.

Next, the principle of operation of the magnetic sensor 61 is explained with reference to FIGS. 17A - 17D. In FIGS. 17A - 17D, the solid line shows the case having no inputted magnetic field, and the broken line shows the case which includes the inputted magnetic field.

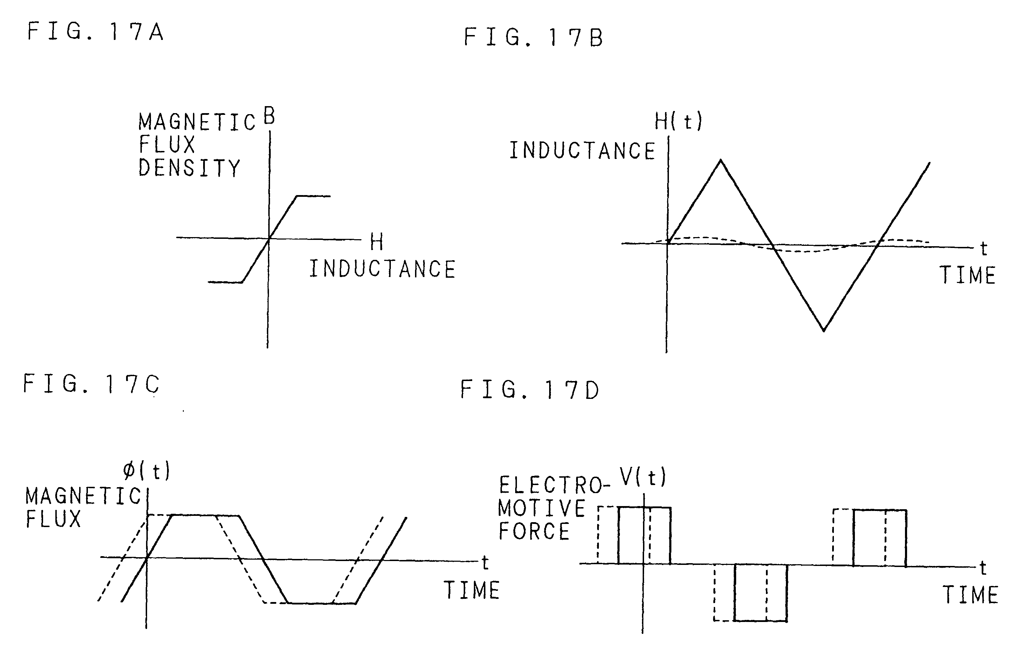

FIG. 17A shows a B-H curve to be generated on the core 81 of a soft magnetic material when an excited current is led to the exciting coil 83 in a manner to generate a magnetic field of triangular wave as shown in FIG. 17B. Assuming that the maximum applied magnetic field has an amplitude sufficient to saturate the core 81, the magnetic flux $\phi(t)$ to be generated is periodically saturated due to the magnetic characteristics held by the core 81 as shown in FIG. 17C, and periodic electromotive force is generated on the detection coil 85 as shown in FIG. 17D.

In case the inputted magnetic field is 0, an electromotive force V as shown in the expression (40), namely, a periodic rectangular wave electromotive force as shown in FIG. 17D, is generated on the detection coil 85 by time-differentiation of the magnetic flux $\phi$.

$$V = \partial\phi/\partial t \tag{40}$$

Against the above, in case there is a weak input magnetic field, when the frequency of the excited current is set to the number of oscillation of the input magnetic field, the magnetic field to be applied to the core 81 varies as shown in broken line in FIG. 17B, and the magnetic flux $\phi(t)$ shifts as in the broken line in FIG. 17C. As a result, the electromotive force generated according to the expression (40) shows displacement of phase as shown by the broken line in FIG. 17D, whereby presenting a voltage having the frequency of twofold that of the excited current on the detection coil 85. By extracting the twofold frequency component by the wave filtering circuit and providing the extracted component with the treatments of alternating current amplification and synchronous rectification, an output of direct current voltage proportionate to the input magnetic field can be obtained.

By the way, because the magnetic field to be observed is an alternating magnetic field, there is an advantage that the effect of the static magnetic field such as global magnetic field can be utterly neglected. Furthermore, as this parallel flux gate type magnetic sensor can detect only the magnetic field component having the same frequency as that of the excited current, it has a merit that it can eliminate the magnetic field component generated from various apparatuses, and it is very effective for rapidly improving the sensitivity. Moreover, as it is possible to make the thickness of the magnetic shield material thin, there is a resultant effect of making the apparatus light weight.

In the above embodiment, the magnetic sensor in which the exciting coil and the detection coil are wound on the bar-form core is described, but a magnetic sensor in which a plurality of exciting coils and a plurality of detection coils are wound on a ring-form core may be used in the receiving device, whereby the change of current in each of detection coils may be measured, such a magnetic sensor can detect more efficiently the magnetic field by electric vector potentials propagated from various different directions. In addition, when a plurality of magnetic sensors each of which has plural exciting coils and detection coils wound on the ring-form core are arranged in three dimensions, the magnetic field by the electric vector potential according to the three-dimensional space can be detected more efficiently and without directivity.

As described above, in case of using a magnetically shielded magnetic sensor 61 for the relay base center 31 and the terminal device 32 as a receiving device of the electric vector potential, it becomes possible to make communication by this electric vector potential between the relay base center 31 and the terminal device 32. Furthermore, by connecting the relay base center 31 with a general communication network, it becomes possible to make communication in good S/N ratio even in a place having communication obstacle which is the weak point of the conventional communication system, and further to alleviate radio obstacles by interference to a great extent. Moreover, when this system is utilized, various apparatuses other than the communication system can be adapted to use in wireless system for example for disuse of a connection cord between the personal computer and the mouse.

Next, the operation of such a communication system is explained. The non-illustrated switch is turned on, and the modulator 57 modulates (FM modulation, or AM modulation, or pulse modulation, etc.) the alternating current voltage from the alternating current power source 58 according to the signal from the signal generator 59, and applies the predetermined frequency (e.g., 10 kHz) and predetermined voltage (e.g., 10 kV) from the alternating current power source 58 through the two electrodes 53, 54 corresponding to the transmission signal. By this, an electric vector potential is sent out from the dielectrics 52 within the range of the angle $\theta$ surrounded by the two diagonal lines 52a, 52b thereof, as shown in FIG. 9. And, from the dielectrics 52, the electric vector potential varied to large/small level, or intermittent electric vector potential is sent out and propagated to the receiving device (magnetic sensor 61).

The magnetic sensor 61 holds the exciting coil 83 in energized state, as described above. When the electric vector potential is reached, the magnetic field, concretely a magnetic flux density, is accordingly changed, with the result that the electric current running through the detection coil 85 of the magnetic sensor 61 varies. This change in current is detected, and the voltage or current signal corresponding to the change is outputted. By this step, it becomes possible to make communication.

In the sending device in such a communication system, the electromagnetic wave, if generated from the dielectrics 52, electrodes 53, 54, being shielded by the cylinder 71, insulator 72 and pipe 73, is not radiated outside. In the receiving device, magnetic shielding is made against the magnetic field by the electromagnetic wave generated from the peripheral electric apparatuses by the shield box 86 and the shield pipe 87. Therefore, it becomes possible to detect accurately only the variation of magnetic flux density by the propagation of the electric vector potential from the sending device.

In such a communication system, because it is a communication using the electric vector potential, due to its excellent permeability, there is utterly no apprehension of lowering of signal strength by communication environment, lowering of S/N ratio by surrounding electromagnetic wave, or the like, and because the electric vector potential does not advance straightforward as in the electromagnetic wave but draws a locus of closed curve, it has advantages that, coupled with its permeability, communication is feasible even under the environment in which the wireless communication is impossible.

With respect to the communication system of the present invention, various experiments were performed. The results of such experiments are described below.

(Experiment 1)

Using a capacitor for the sending device, an alternating current voltage of frequency 10 kHz and voltage 10 kV was applied to the electrodes 53, 54, and the cylinder 71 and pipe 73 were grounded so as to release the charge induced thereto. On the other hand, as the magnetic sensor 61 for the receiving device, one having a resolution of 5 μG was used to measure the magnetic flux density while varying the distance r from the sending device. The results are as shown in Table 2.

As a comparative example, a sending device was constituted by directly connecting between a couple of electrodes to adjust so as to generate the magnetic field of the same magnitude as that of the present invention example and to lead a current of frequency 10 kHz. With respect to the receiving device, the amplitudes of the magnetic field were determined on the case of covering nearly the whole of the detecting part with Permalloy and the case of not covering the same.

As apparent from Table 2, it can be observed that even at a distance r of 100 m, the magnetic field was detected by the receiving device in good reproducibility. As to the magnetic field by the electric vector potential, the measured results agreed with the calculated amounts without respect to the detecting part of the magnetic sensor being magnetically shielded or not, and there was utterly no effect caused by the magnetic shield, and thus it can be seen that the magnetic shield takes charge of the function of shielding only the electromagnetic wave from the peripheral electric apparatus.

Against the above, in the comparative example, it can be seen that there are great differences in the results of the magnetic field between the case of shielding the electromagnetic wave and the case of not shielding the same.

(Experiment 2)

Next, as the dielectrics 52, there were processed strong dielectrics (PLZT) having the relative dielectric constants of 100, 500, 1000, 3000, and 5000, into circular configuration of 68 mm in diameter with their thickness differentiated. Each of the dielectrics was held between the copper metal plates (electrodes) 53, 54 with which lead wires 55, 56 were previously provided, by applying silver paste. Such capacitor was further inserted wholly into the Permalloy cylinder 71 of soft quality magnetic metal (outer diameter: 82 mm, inner diameter: 80 mm, length: 30 mm, wall thickness: 1 mm) to constitute a sending device provided with a radiant electromagnetic wave shielding.

Furthermore, the surroundings of the lead wires 55, 56 were also covered with the insulator 72, and the outer circumference thereof shielded with the Permalloy pipe 73 of 0.5 mm in wall thickness. Further, by applying the alternating current voltage to the electrodes 53, 54, attempt was made to examine whether there was a necessity to release the charge quantities induced to the cylinder 71 and the pipe 73 for shielding into ground or not. Thus, the sending strength was examined on the case of grounding the cylinder 71 and the case of not grounding the same.

On the other hand, with respect to the magnetic sensor 61 of the receiving device, a high sensitivity one having a resolution of 5 μG was used; the whole detecting part of it was covered with the Permalloy shield box 86 having wall thickness of 0.5 mm to make magnetic shielding; and to the drawing out portion of the lead wire 88, an end of the shield pipe 87 of the same material as that of the shield box 86 was connected, and the lead wire 88 was drawn outside through its inside.

Using the sending device and receiving device as described above, the applied alternating current voltages to the capacitor were varied within the range of 20V - 10 kV, and their frequencies within the range of 2 kHz - 10 kHz, to carry out determination of magnetic field (μG) at the position of certain distance separated from the center of the dielectrics 52. The results are as shown in Table 3 and Table 4.

In Table 3 and Table 4, the measuring angle was the angle θ/2 formed with the plane orthogonal with the direction of application of voltage including the point of division into two equal parts of the dielectrics 52 in thickness direction (ref. FIGS. 8, 9). The background magnetic field is a magnetic field of the background measured with the angle of the magnetic sensor 61 rotated by 90 degrees and inclined in the direction orthogonal with the direction of propagation of the electric vector potential. With respect to the judgment on the propriety or not, the case where the ratio of the measured magnetic field/background magnetic field (S/N) exceeded 10 was taken as proper, and the case where the same was less than 10 was taken as not.

As apparent from Table 3 and Table 4, when the relative dielectric constant of the dielectrics 52 is more than 500 and the thickness of the dielectrics 52 is thinned to no more than 5 mm, desirably 0.1 mm, though there are some spreading in propriety depending on the grounding or not of the cylinder 71 and measuring angle, the voltage and the frequency can be lowered to 50V and 4 kHz, respectively, and the power source can be greatly reduced in size. Furthermore, it is known that the earth becomes unnecessary, and manufacture of portable sending device is also possible.


(Experiment 3)


As dielectrics, there were processed strong dielectrics (PLZT) with the relative dielectric constant of 100, 500, 3000, and 5000, respectively, by varying the thickness, shape, and size, after which each material was manufactured into a flat plate capacitor as shown in FIG. 12, which was further inserted into the Permalloy cylinder 71, then the radiation magnetic field was magnetically shielded, and the whole parts were connected as shown in FIG. 8 and assembled to a sending device. On the other hand, with respect to the magnetic sensor 61 of the receiving device, the whole detecting part of high sensitivity (resolution: 2 μG) was covered with the Permalloy shield box 86 of wall thickness 2.0 mm to make magnetic shielding as shown in FIG. 16.

The alternating current voltage applied to the capacitor was varied in the range of 20 V - 10 kV, and the frequency was varied in the range of 2 kHz - 10 kHz to carry out the amplitude measurement of the oscillating magnetic field. The measurement was made by examining the measured magnetic field (μG) at the position of certain distance (m) separated from the center of the dielectrics 52 by the long axis (or long side) and the short axis (or short side). Other conditions were the same as those of the Experiment 2. The measurement results are shown in Table 5 and Table 6.

In Table 5 and Table 6, the marks 2a, 2b show, in the elliptical columnar dielectrics 52, the sizes of the long axis and short axis sizes, and in the rectangular parallelepiped dielectrics 52, the lengths of the long side and short side, respectively. Other points are same as those of the cases of Table 3 and Table 4. As apparent from Table 5 and Table 6, when the relative dielectric constant of the dielectrics 52 is more than 500, the shape anisotropy (a/b) of the dielectrics 52 is made large, desirably more than 4, and its thickness L is thinned to 0.2 mm, it was known that the communication could be made with separation by 300 m between the sending device and the receiving device even under the condition of the voltage and the frequency being lowered to 50 V and 5 kHz, respectively. Also, from the measured magnetic field of No. 10, the result was obtained that the communication was possible even at a distance of 1000 m between the two devices.


(Experiment 4)


As a sending device of the electric vector potential, the one having the constitution shown in FIG. 12 was used. With respect to the dielectrics 52 held between the electrodes 53 and 54, the conditions were, relative dielectric constant: 5000, thickness: 30 mm, and diameter: 28mm. The Permalloy cylinder 71 had the outer diameter of 42 mm, inner diameter of 38 mm, and length of 60 mm.

On the other hand, as to the magnetic sensor 61, there were used two kinds of commercialized magnetic resistance element and a parallel flux gate type one. And, the actual effective values of the magnetic field were measured in the case of the magnetic shielding with the material having the magnetic characteristics as shown in Table 7 and in the case of no magnetic shielding. Also, the core 81 of the magnetic sensor 71 was oriented to the tangential direction of the electric vector potential in the two equally divided vertical plane of the dielectrics 52. That is to say, the core 81 was arranged so that the oscillating magnetic field and the long axis of the core 81 became parallel relations with each other.

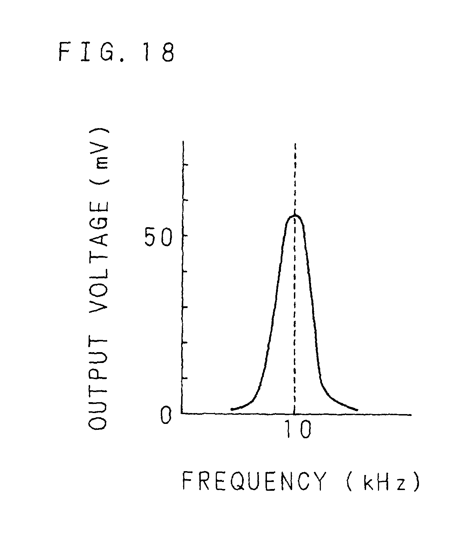

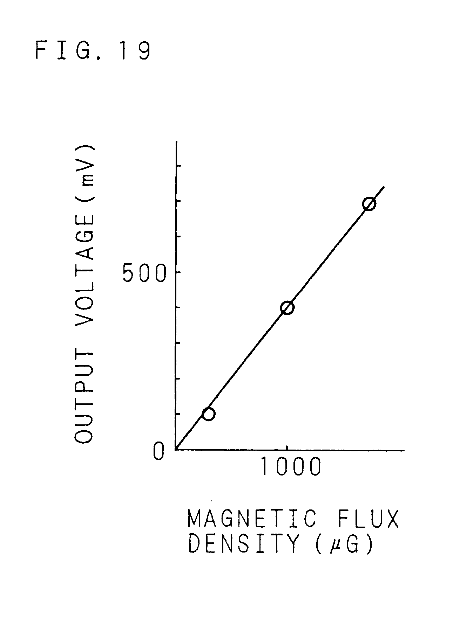

The frequency characteristics of the output voltage and the relationship between the magnetic flux density and the output voltage in the parallel flux gate type magnetic sensor are shown in FIG. 18 and FIG. 19, respectively. In order to make the magnetic shield effect more remarkable, the distance between the dielectric 52 and the magnetic sensor 61 was constantly kept at 0.5 m.

The results of such measurements are shown in Table 8 and Table 9. With respect to the judgment as to the propriety or not as the magnetic sensor, the amount of more than 0.80 in the ratio of the calculated amount to the actually measured amount of the magnetic field was judged as passable, and the level less than that was judged to be rejected. That is to say, with the threshold that the magnetic field component of the background is 20 %, judgment of aptness or not was made. In Table 8 and Table 9, the marks MR and FG in the style of the magnetic sensor represent the magnetic resistance element and parallel flux gate type, respectively. Further, in case that the soft magnetic member, a shield material for the magnetic sensor, was compounded, Permalloy was set outside and grounded. In case of the Ni-Zn ferrite, no grounding was made because of no sense of grounding due to high electric resistance.

As apparent from the results of Table 8 and Table 9, when magnetic shielding is effected by a soft magnetic material, without being related with the type of the magnetic sensor, the oscillating magnetic field by electric vector potential can be measured in good precision, and in case of the metal soft quality magnetic member, the measuring precision can be further improved by grounding.

(Experiment 5)

Experiment was performed to confirm whether the communication system to send from the relay base center 31 and receive by the terminal device 32 would be possible or not. At first, in order to receive a microwave at the relay base center 31, detection was made with a commercialized portable telephone (PHS), amplified voltage was taken out to adjust its frequency to 10 kHz, after which it was voltage amplified to 500 V, and then connected to a sending device for an electric vector potential as shown in FIG. 8. The sending device had a columnar dielectrics 52 having a relative dielectric constant of 5000, thickness of 1 mm, and diameter of 20 mm interposed between the electrodes 53 and 54 to make a sending device for applying a voltage to the dielectrics 52 through the electrodes 53 and 54 to generate an electric vector potential modulated corresponding to the signal. Also, in order to shield the radiated electromagnetic wave from the dielectrics 52, the Permalloy-made cylinder 71 (outer diameter: 32 mm, inner diameter: 30 mm) was set coaxially around the dielectrics 52, as shown in FIG. 12. Also, the lead wires 55, 56 were connected to the voltage amplifier through the insulator 72 and the Permalloy-made pipe 73.

On the other hand, in the receiving device, as shown in FIG. 16, the whole detecting part of the high sensitivity (resolution: 2 μG) magnetic sensor 61 was covered with the Permalloy-made shield box 86 having wall thickness of 2 mm to make magnetic shielding, and the lead wire 88 was also connected to the integrator 62 or the like, as shown in FIG. 10, through the Permalloy-made shield pipe 87. By this, the magnetic field by the time variation of the electric vector potential was measured, and the signal current induced by the magnetic field was passed through the integrator 62 to return to the original signal. The resulting signal was amplified to make conversion to voice through the connected speaker 67.

As to the experiment, utilizing a telephone line, connection was made with the portable telephone (PHS) which is the relay base center 31, and confirmation experiment was made to see whether the output was made from the speaker 67 which was connected to the wired magnetic sensor 61 as shown in FIG. 11 in the terminal device 32.

With respect to the experiment to send the signal received by the relay base center 31 through the wire line 34 to the terminal device 32, the current of a telephone line was voltage converted and voltage amplified, which was inputted to the signal generator 59 of the sending device of electric vector potential as shown in FIG. 8, to experiment as to whether the telephone voice would be outputted from the speaker 67 connected to the magnetic sensor 61 of the terminal device 32 or not. The speaker 67 in the receiving device for the electric vector potential was placed in an electric wave dark room, and the sending device for the electric vector potential was placed outdoors. The measuring distance was a distance between the sending device for the electric vector potential and the receiving device for the electric vector potential in the electric wave dark room. The results of measurements are shown in Table 10.

(Experiment 6)

Inverse to the experiment of Experiment 5, an experiment was made to see whether a communication system to send an electric vector potential from the terminal device 32 and receive the same at the relay base center 31 was possible or not.

At first, a voice signal current received by the microphone 68 was converted to a voltage and voltage amplified to 500 V. Then, the voltage was frequency modulated to a frequency of 10 kHz and inputted to the signal generator 59 in the sending device for the electric vector potential as shown in FIG. 8, as in Experiment 5, to generate an electric vector potential. A signal current received by the same magnetic sensor 61 as that of Experiment 5 through the generated electric vector potential was inputted to a commercialized portable telephone (PHS) so as to send a microwave. As the experiment, confirmation was made as to whether or not the voice of the microphone 68 propagated as an electric vector potential, and after it was received by the magnetic sensor 61, it was sent as a microwave from the portable telephone and the voice was connected to the telephone line.

Another experiment was conducted to see whether, after receiving by the magnetic sensor 61, the current was amplified and connected direct to a telephone line, and the voice could be heard with a telephone receiver or not. As to the experiment, the microphone 68 and the sending device for the electric vector potential were placed in an electric wave dark room, and the receiving device for the electric vector potential and the portable telephone (PHS) were placed outdoors. The measured distance was the distance between the sending device for the electric vector potential in the electric wave dark room and the receiving device for the electric vector potential outdoors. The results of measurements are shown in Table 11.

As apparent from Table 10 and Table 11, it is known that, when the electric vector potential is used as a communication medium, communication can be easily between the inside and the outside of the electric wave dark room, and that, from Experiments 5 and 6, it becomes possible to make communication even in places of electric wave obstacle or places where communication by wire line is impossible.

(Math. 1)

$$D_z = \left( \frac{\partial C_y}{\partial x} - \frac{\partial C_x}{\partial y} \right) = \frac{-Qa}{4\pi \left\{ \left( \frac{a}{2} \right)^2 + r^2 \right\}^{3/2}} \quad \cdots(4)$$

$$D_x = \left( \frac{\partial C_z}{\partial y} - \frac{\partial C_y}{\partial z} \right) = 0 \quad \cdots(5)$$

$$D_y = \left( \frac{\partial C_x}{\partial z} - \frac{\partial C_z}{\partial x} \right) = 0 \quad \cdots(6)$$

(Math. 2 )

$C_x$ and $C_y$ are functions of $x$ and $y$.

When $\dfrac{\partial C_y}{\partial x} = \dfrac{-\partial C_x}{\partial y}$ , from the expression (4) .

$$\frac{\partial C_y}{\partial x} = \frac{-Qa}{8\pi\left\{\left(\dfrac{a}{2}\right)^2 + r^2\right\}^{3/2}}$$

$$\frac{\partial C_x}{\partial y} = \frac{Qa}{8\pi\left\{\left(\dfrac{a}{2}\right)^2 + r^2\right\}^{3/2}}$$

$$C_x = \frac{-Qay}{4\pi r^2\left\{\left(\dfrac{a}{2}\right)^2 + r^2\right\}^{1/2}} \qquad \cdots(7)$$

$$C_y = \frac{Qax}{4\pi r^2\left\{\left(\dfrac{a}{2}\right)^2 + r^2\right\}^{1/2}} \qquad \cdots(8)$$

$$C_z = 0 \qquad \cdots(9)$$

(Math.3 )

$$\int *D\,d*S = \oint *C\,d*r = Q \qquad (12)$$

EP 0 889 607 B1

(Math. 4 )

$$\int * D d * S = + \frac{Q a}{4 \pi} \int_0^\infty \int_0^{2\pi} \frac{r^2 \, d r \, d \theta}{\left\{ \left( \frac{a}{2} \right)^2 + r^2 \right\}^{3/2}}$$

$$= + \frac{Q a}{4 \pi} \, 2 \pi \int_0^\infty \frac{r \, d r}{\left\{ \left( \frac{a}{2} \right)^2 + r^2 \right\}^{3/2}}$$

$$\left[ \begin{array}{l} \text{When} \quad r = \frac{a}{2} \tan x \\[2mm] \int_0^{\pi/2} \frac{\left( \frac{a}{2} \right) \tan x \left( \frac{a}{2} \right) \dfrac{d x}{\cos^2 x}}{\left( \frac{a}{2} \right)^3 \left( 1 + \tan^2 x \right)^{3/2}} \\[4mm] = \frac{2}{a} \int_0^{\pi/2} \frac{\dfrac{\sin x}{\cos^3 x} \, d x}{\dfrac{1}{\cos^3 x}} = \frac{2}{a} \left( - \cos x \right) \Big|_0^{\pi/2} = \frac{2}{a} \end{array} \right]$$

$$= \frac{+ Q a}{4 \pi} \, 2 \pi \, \frac{2}{a} = + Q$$

20

(Math. 5 )

$$\oint *Cd*r = \oint \frac{Qa(-y*e_1+x*e_2)(dx*e_1+dy*e_2)}{4\pi r^2 \left\{ \left( \frac{a}{2} \right)^2 + r^2 \right\}^{1/2}}$$

$$= \oint \frac{Qa(-ydx+xdy)}{4\pi r^2 \left\{ \left( \frac{a}{2} \right)^2 + r^2 \right\}^{1/2}}$$

When $x = r\cos\theta$, $y = r\sin\theta$,

$$= \int_0^{2\pi} \frac{Qar^2 d\theta}{4\pi r^2 \left\{ \left( \frac{a}{2} \right)^2 + r^2 \right\}^{1/2}}$$

$$= \frac{Qar^2 2\pi}{4\pi r^2 \left\{ \left( \frac{a}{2} \right)^2 + r^2 \right\}^{1/2}}$$

$$= \frac{Qa}{2\left\{ \left( \frac{a}{2} \right)^2 + r^2 \right\}^{1/2}}$$

Supposing $a \gg r$

$$= \frac{Qa}{2 \cdot \frac{a}{2}} = Q$$

(Math. 6 )

$$\left.\begin{array}{l} \text{EXTERNAL}: *D = 0, \quad *E = 0 \qquad (r > r_0) \\ \text{INTERNAL}: *D = *P, \ *E = 0 \qquad (r_0 \geqq r \geqq 0) \end{array}\right\} \cdots (14)$$

(Math. 7 )

$$\left.\begin{array}{l} \text{EXTERNAL}: *D = 0, \ *E = 0 \quad (x^2 / a^2 + y^2 / b^2 > 1) \\ \text{INTERNAL}: *D = *P, \ *E = 0 \ (x^2 / a^2 + y^2 / b^2 \leqq 1) \end{array}\right\} \cdots (15)$$

(Math. 8 )

$$\left.\begin{array}{l} \text{EXTERNAL}: *D = (0, \ 0, \ 0) \qquad (r > r_0) \\ \text{INTERNAL}: *D = (0, \ 0, \ Q/S) \quad (r_0 \geqq r \geqq 0) \end{array}\right\} \cdots (16)$$

(Math. 9 )

$$\left.\begin{array}{l} \text{EXTERNAL}: *D = (0, \ 0, \ 0) \quad (x^2 / a^2 + y^2 / b^2 > 1) \\ \text{INTERNAL}: *D = (0, \ 0, \ Q/S)(x^2 / a^2 + y^2 / b^2 \leqq 1) \end{array}\right\} \cdots (17)$$

(Math. 10)

$$\text{EXTERNAL} : *C = Q\,(-y*e_1 + x*e_2)\,/\,2\pi r^2$$
$$(r > r_0)$$
$$\text{INTERNAL} : *C = Q\,(-y*e_1 + x*e_2)\,/\,2\pi r_0{}^2$$
$$(r_0 \geqq r \geqq 0) \qquad \cdots(20)$$

(Math. 11)

$$\text{EXTERNAL} : *C = Q\,(-y*e_1 + x*e_2)\,/\,2\pi\,(x^2/a^2$$
$$+\,y^2/b^2)\,a\,b$$
$$(x^2/a^2 + y^2/b^2 > 1)$$
$$\text{INTERNAL} : *C = Q\,(-y*e_1 + x*e_2)\,/\,2\pi\,a\,b$$
$$(x^2/a^2 + y^2/b^2 \leqq 1) \qquad \cdots(21)$$

(Math.12)

$$\int *D\,d*S = \oint *C\,d*r = Q \qquad (22)$$

d * S : CHANGE OF AREA OF CIRCLE OR ELLIPSE
d * r : CHANGE OF OUTLINE OF CIRCLE OR ELLIPSE

(Math. 13)

$$*H = \frac{\dfrac{\varepsilon S V_0\, 2\pi f}{L}\cos(\omega t)(-y*e_1 + x*e_2)}{2\pi\left(\dfrac{x^2}{a^2} + \dfrac{y^2}{b^2}\right)ab}$$

Substituting $S = ab\pi$,

$$*H = \frac{\dfrac{\varepsilon ab\pi V_0\, 2\pi f}{L}\cos(\omega t)(-y*e_1 + x*e_2)}{2\pi\left(\dfrac{x^2}{a^2} + \dfrac{y^2}{b^2}\right)ab}$$

$$= \frac{\dfrac{\varepsilon \pi V_0\, f}{L}\cos(\omega t)(-y*e_1 + x*e_2)}{\left(\dfrac{x^2}{a^2} + \dfrac{y^2}{b^2}\right)}$$

$$= H_x*e_1 + H_y*e_2$$

$$\left.\begin{aligned}
H_x &= -\frac{\varepsilon \pi V_0\, f\, y}{L}\cos(\omega t)\Big/\left(\frac{x^2}{a^2} + \frac{y^2}{b^2}\right) \\
H_y &= \frac{\varepsilon \pi V_0\, f\, x}{L}\cos(\omega t)\Big/\left(\frac{x^2}{a^2} + \frac{y^2}{b^2}\right)
\end{aligned}\right\} \cdots (37)$$

(Math. 14)

$$\left.\begin{aligned}
B_x &= -\mu_0\varepsilon V_0\pi f y \cos\omega t\Big/(x^2/a^2 + y^2/b^2)L \\
B_y &= +\mu_0\varepsilon V_0\pi f x \cos\omega t\Big/(x^2/a^2 + y^2/b^2)L
\end{aligned}\right\} \cdots (38)$$

(Math. 15)

$$B_x = -\mu_0 \varepsilon V_0 \pi f y \cos\omega t \cdot b^2 / yL \ (\text{ON } y \text{ AXIS})$$
$$B_y = \mu_0 \varepsilon V_0 \pi f x \cos\omega t \cdot a^2 / xL \ (\text{ON } x \text{ AXIS})$$
$$\left.\right\} \cdots (39)$$

Table 1

| (a) | No. | (b) | (c) a (mm) | NUMBER OF CAPACITORS | (d) r (m) | (e) $\theta$ (deg) | (f) (V) | (g) (kHz) | (h) ($\mu$ G) | (i) ($\mu$ G) | (j) |
|---|---|---|---|---|---|---|---|---|---|---|---|
| | 1 | ◯ | 1.0 | 1 2 | 2.0 | 0 | 1000 | 2 | 4300 | 80 | ◯ |
| | 2 | ◯ | 1.0 | 1 2 | 2.0 | 10 | 1000 | 2 | 1800 | 60 | ◯ |
| | 3 | ◯ | 1.0 | 1 2 | 2.0 | 15 | 1000 | 2 | 150 | 30 | × |
| | 4 | ◯ | 1.0 | 1 2 | 2.0 | 30 | 1000 | 2 | 4250 | 75 | ◯ |
| | 5 | ◯ | 1.0 | 3 6 | 2.0 | 0 | 400 | 5 | 6800 | 150 | ◯ |
| | 6 | ◯ | 1.0 | 3 6 | 2.0 | 5 | 400 | 5 | 3300 | 100 | ◯ |
| | 7 | ◯ | 1.0 | 3 6 | 2.0 | 10 | 400 | 5 | 6900 | 170 | ◯ |
| | 8 | × | 1.0 | 1 2 | 2.0 | 10 | 200 | 5 | 930 | 80 | ◯ |
| | 9 | × | 1.0 | 3 6 | 2.0 | 5 | 200 | 5 | 1720 | 110 | ◯ |

(a) : EXPERIMENT      (b) : EARTH OF CYLINDER(◯ : PRESENT,   × : ABSENT)
(c) : THICKNESS OF DIELECTRICS(a)    (d) : DISTANCE(r)    (e) : MEASURING ANGLE($\theta$)      (f) : VOLTAGE
(g) : FREQUENCY      (h) : MEASURED MAGNETIC FIELD    (i) : BACKGROUND MAGNETIC FIELD
(j) : PROPRIETY(◯ : GOOD,   × : BAD)

EP 0 889 607 B1

Table 2

| | No. | (C) | DISTANCE r (m) | (d) (kV) | (e) (A) | (f) (μG) | (g) (μG) |
|---|---|---|---|---|---|---|---|
| (a) | 1 | ○ | 0.5 | 10 | — | 6850 | 6800 |
| | 2 | ○ | 2.0 | 10 | — | 1650 | 1700 |
| | 3 | ○ | 4.0 | 10 | — | 865 | 850 |
| | 4 | ○ | 7.0 | 10 | — | 480 | 485 |
| | 5 | ○ | 10.0 | 10 | — | 355 | 340 |
| | 6 | ○ | 20.0 | 10 | — | 175 | 170 |
| | 7 | ○ | 40.0 | 10 | — | 90 | 85 |
| | 8 | ○ | 100.0 | 10 | — | 40 | 34 |
| (b) | 9 | ○ | 0.5 | — | 1.71 | 55 | 6800 |
| | 10 | × | 0.5 | — | 1.71 | 6950 | 6800 |
| | 11 | ○ | 4.0 | — | 1.71 | 55 | 850 |
| | 12 | × | 4.0 | — | 1.71 | 870 | 850 |
| (a) : EXPERIMENT 1 (b) : COMPARISON | | | | | | | |
| (c) : SHIELD OF MAGNETIC SENSOR(○ : PRESENT, × : ABSENT) | | | | | | | |
| (d) : VOLTAGE (e) : CURRENT (f) : MEASURED MAGNETIC FIELD | | | | | | | |
| (g) : CALCULATED MAGNETIC FIELD | | | | | | | |

Table 3

| № | (b) | (c) | (d) a (mm) | (e) r (m) | (f) θ (deg) | (g) (V) | (h) (kHz) | (i) (μG) | (j) (μG) | (k) |
|---|---|---|---|---|---|---|---|---|---|---|
| 1 | ○ | 5000 | 5 | 2.0 | 0 | 1000 | 10 | 2050 | 30 | ○ |
| 2 | × | 5000 | 5 | 2.0 | 0 | 1000 | 10 | 2600 | 520 | × |
| 3 | ○ | 5000 | 5 | 2.0 | 10 | 1000 | 10 | 810 | 25 | ○ |
| 4 | ○ | 5000 | 5 | 2.0 | 30 | 1000 | 10 | 120 | 20 | × |
| 5 | ○ | 5000 | 4 | 2.0 | 0 | 800 | 10 | 2270 | 220 | ○ |
| 6 | ○ | 5000 | 1 | 2.0 | 0 | 200 | 10 | 2020 | 20 | ○ |
| 7 | ○ | 5000 | 0.5 | 2.0 | 0 | 100 | 10 | 2020 | 20 | ○ |
| 8 | × | 5000 | 0.5 | 2.0 | 0 | 100 | 10 | 2240 | 200 | ○ |
| 9 | ○ | 5000 | 0.2 | 2.0 | 0 | 40 | 10 | 2020 | 20 | ○ |
| 10 | ○ | 5000 | 0.1 | 2.0 | 0 | 100 | 2 | 2030 | 30 | ○ |

(a): EXPERIMENT 2   (b): EARTH OF CYLINDER(○: PRESENT, ×: ABSENT)   (e): DISTANCE(r)
(c): RELATIVE DIELECTRIC CONSTANT   (d): THICKNESS OF DIELECTRICS(a)
(f): MEASURING ANGLE(θ)   (g): VOLTAGE   (h): FREQUENCY   (i): MEASURED MAGNETIC FIELD
(j): BACKGROUND MAGNETIC FIELD   (k): PROPRIETY(○: GOOD, ×: BAD)

28

EP 0 889 607 B1

Table 4

| | No. | (b) | (c) | (d) a (mm) | (e) r (m) | (f) θ (deg) | (g) (V) | (h) (kHz) | (i) ($\mu$G) | (j) ($\mu$G) | (k) |
|---|---|---|---|---|---|---|---|---|---|---|---|
| (a) | 11 | ○ | 5000 | 0.1 | 2.0 | 0 | 50 | 4 | 2030 | 30 | ○ |
| | 12 | × | 5000 | 0.1 | 2.0 | 0 | 50 | 4 | 2120 | 60 | ○ |
| | 13 | × | 5000 | 0.05 | 2.0 | 0 | 20 | 5 | 2120 | 60 | ○ |
| | 14 | × | 3000 | 0.1 | 2.0 | 0 | 83 | 4 | 2050 | 25 | ○ |
| | 15 | × | 1000 | 0.1 | 2.0 | 0 | 250 | 4 | 2010 | 70 | ○ |
| | 16 | × | 500 | 0.1 | 2.0 | 0 | 250 | 8 | 1980 | 80 | ○ |
| | 17 | × | 100 | 0.1 | 2.0 | 0 | 250 | 8 | 420 | 60 | × |

(a) : EXPERIMENT 2　　(b) : EARTH OF CYLINDER(○ : PRESENT, × : ABSENT)
(c) : RELATIVE DIELECTRIC CONSTANT　　(d) : THICKNESS OF DIELECTRICS(a)　　(e) : DISTANCE(r)
(f) : MEASURING ANGLE($\theta$)　　(g) : VOLTAGE　　(h) : FREQUENCY　　(i) : MEASURED MAGNETIC FIELD
(j) : BACKGROUND MAGNETIC FIELD　　(k) : PROPRIETY(○ : GOOD, × : BAD)

## Table 5

| | No. | (b) | (c) | (d) | | | (e) r | a / b | (f) | (g) | (h) | (i) | (j) | (k) |
|---|---|---|---|---|---|---|---|---|---|---|---|---|---|---|
| | | | | L (mm) | 2a (mm) | 2b (mm) | (m) | | | (V) | (kHz) | ($\mu$ G) | ($\mu$ G) | |
| (a) | 1 | CIRCLE | 5000 | 5 | 20 | 20 | 2 | 1 | a | 1000 | 10 | 170 | 2 | ◯ |
| | 2 | ELLIPSE | 5000 | 5 | 40 | 20 | 2 | 2 | a | 1000 | 10 | 700 | 3 | ◯ |
| | 3 | ELLIPSE | 5000 | 5 | 40 | 20 | 2 | 2 | b | 1000 | 10 | 160 | 2 | ◯ |
| | 4 | ELLIPSE | 5000 | 5 | 80 | 20 | 2 | 4 | a | 1000 | 10 | 2750 | 13 | ◯ |
| | 5 | ELLIPSE | 5000 | 5 | 80 | 20 | 2 | 4 | b | 1000 | 10 | 175 | 2 | ◯ |
| | 6 | ELLIPSE | 5000 | 5 | 160 | 20 | 2 | 8 | a | 1000 | 10 | 11200 | 49 | ◯ |
| | 7 | ELLIPSE | 5000 | 5 | 160 | 20 | 2 | 8 | b | 1000 | 10 | 190 | 2 | ◯ |
| | 8 | ELLIPSE | 5000 | 2 | 80 | 20 | 100 | 4 | a | 1000 | 10 | 140 | 2 | ◯ |
| | 9 | ELLIPSE | 5000 | 1 | 80 | 20 | 300 | 4 | a | 1000 | 10 | 95 | 2 | ◯ |
| | 10 | ELLIPSE | 5000 | 0.2 | 160 | 20 | 300 | 8 | a | 1000 | 2 | 370 | 3 | ◯ |

(a) : EXPERIMENT 3    (b) : SHAPE OF DIELECTRICS    (c) : RELATIVE DIELECTRIC CONSTANT
(d) : THICKNESS AND SIZE OF DIELECTRICS    (e) : DISTANCE(r)    (f) : MEASURING DIRECTION
(g) : VOLTAGE    (h) : FREQUENCY    (i) : MEASURED MAGNETIC FIELD    (j) : BACKGROUND MAGNETIC FIELD
(k) : PROPRIETY(◯ : GOOD.   × : BAD)

EP 0 889 607 B1

EP 0 889 607 B1

Table 6

| (a) | No. | (b) | (c) | (d) L (mm) | (d) 2a (mm) | (d) 2b (mm) | (e) r (m) | a／b | (f) | (g) (V) | (h) (kHz) | (i) ($\mu$G) | (j) ($\mu$G) | (k) |
|---|---|---|---|---|---|---|---|---|---|---|---|---|---|---|
| (a) | 11 | ELLIPSE | 5000 | 0.2 | 160 | 20 | 300 | 8 | a | 100 | 10 | 185 | 2 | ○ |
| | 12 | ELLIPSE | 5000 | 0.2 | 160 | 20 | 300 | 8 | a | 50 | 5 | 49 | 2 | ○ |
| | 13 | RECTANGLE | 3000 | 0.2 | 160 | 20 | 300 | 8 | a | 100 | 10 | 105 | 2 | ○ |
| | 14 | RECTANGLE | 500 | 0.2 | 160 | 20 | 300 | 8 | a | 100 | 10 | 19 | 2 | × |
| | 15 | RECTANGLE | 500 | 0.1 | 160 | 20 | 300 | 8 | a | 100 | 10 | 39 | 2 | ○ |
| | 16 | RECTANGLE | 100 | 0.1 | 160 | 20 | 300 | 8 | a | 100 | 10 | 7 | 2 | × |

(a) : EXPERIMENT 3    (b) : SHAPE OF DIELECTRICS    (c) : RELATIVE DIELECTRIC CONSTANT
(d) : THICKNESS AND SIZE OF DIELECTRICS    (e) : DISTANCE(r)    (f) : MEASURING DIRECTION
(g) : VOLTAGE    (h) : FREQUENCY    (i) : MEASURED MAGNETIC FIELD    (j) : BACKGROUND MAGNETIC FIELD
(k) : PROPRIETY(○ : GOOD,  × : BAD)

Table 7

| MATERIAL | MAGNETIC CHARACTERISTICS | | ELECTRICAL RESISTANCE (Ωm) |
|---|---|---|---|
| | i H c (Oe) | $\mu_m$ | |
| Fe—Ni SYSTEM PERMALLOY | 0.007 | 450000 | $1.4 \times 10^{-7}$ |
| Mn—Zn SYSTEM PERMALLOY | 0.025 | 3000 | $4.3 \times 10^{+1}$ |

Table 8

| (a) | No | (b) (kHz) | (c) (mm) | | (d) (kV) | (e) r (m) | MAGNETIC SENSOR | | | | (g) ($\mu$G) | (h) ($\mu$G) | RATIO $\dfrac{B_{cal}}{B_{mea}}$ | (i) |
|---|---|---|---|---|---|---|---|---|---|---|---|---|---|---|
| | | | | | | | SHIELD MEMBER | | (f) | TYPE | | | | |
| | | | t | r | | | MATERIAL | (j) (mm) | | | | | | |
| | 1 | 10 | 30 | 14 | 10 | 0.5 | NOTHING | 0 | × | M R | 4100 | 2280 | 0.56 | × |
| | 2 | 100 | 30 | 14 | 1 | 0.5 | NOTHING | 0 | × | M R | 8200 | 2280 | 0.28 | × |
| | 3 | 10 | 30 | 14 | 10 | 0.5 | NOTHING | 0 | × | F G | 2820 | 2280 | 0.81 | ○ |
| | 4 | 100 | 30 | 14 | 1 | 0.5 | NOTHING | 0 | × | F G | 3350 | 2280 | 0.64 | × |
| | 5 | 10 | 30 | 14 | 10 | 0.5 | PERMALLOY | 2 | × | F G | 2400 | 2280 | 0.95 | ○ |
| | 6 | 10 | 30 | 14 | 10 | 0.5 | PERMALLOY | 2 | ○ | F G | 2310 | 2280 | 0.99 | ○ |
| | 7 | 10 | 30 | 14 | 10 | 0.5 | PERMALLOY | 2 | × | M R | 2800 | 2280 | 0.81 | ○ |
| | 8 | 10 | 30 | 14 | 10 | 0.5 | PERMALLOY | 2 | ○ | M R | 2600 | 2280 | 0.88 | ○ |
| | 9 | 100 | 30 | 14 | 1 | 0.5 | PERMALLOY | 2 | × | F G | 2540 | 2280 | 0.90 | ○ |
| | 10 | 100 | 30 | 14 | 1 | 0.5 | PERMALLOY | 2 | ○ | F G | 2480 | 2280 | 0.92 | ○ |

(a) : EXPERIMENT 4   (b) : SEND FREQUENCY   (c) : THLCKNESS(t) AND DIAMETER(r) OF DIELECTRICS
(d) : MAXIMUM APPLIED VOLTAGE   (e) : DISTANCE(r)   (f) : EARTH(○ : PRESENT. × : ABSENT)
(g) : MEASURED MAGNETIC FIELD   (h) : CALCULATED MAGNETIC FIELD
(i) : PROPRIETY(○ : GOOD. × : BAD)   (j) : THICKNESS

Table 9

| (a) | No. | (b) (kHz) | (c) (mm) | | (d) (kV) | (e) r (m) | MAGNETIC SENSOR | | | (f) | TYPE | (g) ($\mu$G) | (h) ($\mu$G) | RATIO $\dfrac{B_{cal}}{B_{mea}}$ | (i) |
|---|---|---|---|---|---|---|---|---|---|---|---|---|---|---|---|
| | | | | | | | SHIELD MEMBER | | | | | | | | |
| | | | t | r | | | MATERIAL | (j) (mm) | | | | | | | |
| | 11 | 100 | 30 | 14 | 1 | 0.5 | PERMALLOY | 2 | | × | M R | 3200 | 2280 | 0.71 | × |
| | 12 | 100 | 30 | 14 | 1 | 0.5 | PERMALLOY | 5 | | ○ | M R | 3000 | 2280 | 0.76 | × |
| | 13 | 100 | 30 | 14 | 1 | 0.5 | Ni－Zn | 5 | | × | F G | 2420 | 2280 | 0.94 | ○ |
| | 14 | 10 | 30 | 14 | 10 | 0.5 | Ni－Zn | 5 | | × | F G | 2690 | 2280 | 0.85 | ○ |
| | 15 | 100 | 30 | 14 | 1 | 0.5 | Ni－Zn | 5 | | × | M R | 2800 | 2280 | 0.81 | ○ |
| | 16 | 10 | 30 | 14 | 10 | 0.5 | Ni－Zn PERMALLOY | 5 2 | | ○ | M R | 2400 | 2280 | 0.95 | ○ |
| | 17 | 100 | 30 | 14 | 1 | 0.5 | Ni－Zn PERMALLOY | 5 2 | | ○ | M R | 2350 | 2280 | 0.97 | ○ |
| | 18 | 10 | 30 | 14 | 10 | 0.5 | Ni－Zn PERMALLOY | 5 2 | | ○ | F G | 2300 | 2280 | 0.99 | ○ |
| | 19 | 100 | 30 | 14 | 1 | 0.5 | Ni－Zn PERMALLOY | 5 2 | | ○ | F G | 2310 | 2280 | 0.99 | ○ |

(a) : EXPERIMENT 4    (b) : SEND FREQUENCY    (c) : THLCKNESS(t) AND DIAMETER(r) OF DIELECTRICS
(d) : MAXIMUM APPLIED VOLTAGE    (e) : DISTANCE(r)    (f) : EARTH(○ : PRESENT, × : ABSENT)
(g) : MEASURED MAGNETIC FIELD    (h) : CALCULATED MAGNETIC FIELD
(i) : PROPRIETY(○ : GOOD,  × : BAD)    (j) : THICKNESS

Table 10

| | No. | (b) | (c) | (d) | | (e) | (f) r | (g) | (h) | (i) |
|---|---|---|---|---|---|---|---|---|---|---|
| | | | | t (mm) | r (mm) | (V) | (m) | ($\mu$G) | ($\mu$G) | |
| (a) | 1 | MICROWAVE | 5000 | 1 | 1 0 | 500 | 2. 0 | 420 | 436 | GOOD |
| | 2 | MICROWAVE | 5000 | 1 | 1 0 | 500 | 5. 0 | 180 | 175 | GOOD |
| | 3 | MICROWAVE | 5000 | 1 | 1 0 | 500 | 10. 0 | 90 | 87 | GOOD |
| | 4 | MICROWAVE | 5000 | 1 | 1 0 | 500 | 20. 0 | 45 | 44 | GOOD |
| | 5 | MICROWAVE | 5000 | 1 | 1 0 | 500 | 50. 0 | 20 | 17 | GOOD |
| | 6 | WIRE | 5000 | 1 | 1 0 | 500 | 50. 0 | 10 | 17 | GOOD |

(a) : EXPERIMENT 5 (b) : RECEIVED SIGNAL AT BASE CENTER (c) : RELATIVE DIELECTRIC CONSTANT
(d) : THICKNESS(t) AND DIAMETER(r) OF DIELECTRICS (e) : MAXIMUM APPLIED VOLTAGE
(f) : DISTANCE(r) (g) : MEASURED MAGNETIC FIELD (h) : CALCULATED MAGNETIC FIELD
(i) : COMMUNICATION STATE

EP 0 889 607 B1

Table 11

| No. | (b) | (c) | (d) t (mm) | (d) r (mm) | (e) (V) | (f) r (m) | (g) (μG) | (h) (μG) | (i) |
|---|---|---|---|---|---|---|---|---|---|
| 1 | MICROWAVE | 5000 | 1 | 10 | 500 | 2.0 | 430 | 436 | GOOD |
| 2 | MICROWAVE | 5000 | 1 | 10 | 500 | 5.0 | 170 | 175 | GOOD |
| 3 | MICROWAVE | 5000 | 1 | 10 | 500 | 10.0 | 95 | 87 | GOOD |
| 4 | MICROWAVE | 5000 | 1 | 10 | 500 | 20.0 | 47 | 44 | GOOD |
| 5 | MICROWAVE | 5000 | 1 | 10 | 500 | 50.0 | 20 | 17 | GOOD |
| 6 | WIRE | 5000 | 1 | 10 | 500 | 50.0 | 18 | 17 | GOOD |

(a) : EXPERIMENT 6    (b) : RECEIVED SIGNAL AT BASE CENTER    (c) : RELATIVE DIELECTRIC CONSTANT
(d) : THICKNESS(t) AND DIAMETER(r) OF DIELECTRICS    (e) : MAXIMUM APPLIED VOLTAGE
(f) : DISTANCE(r)    (g) : MEASURED MAGNETIC FIELD    (h) : CALCULATED MAGNETIC FIELD
(i) : COMMUNICATION STATE

## Claims

1. A potential generating method,
   **characterized by** applying an oscillating voltage to a dielectric (12, 52) to generate electric vector potential.

**2.** An electric vector potential generating method according to claim 1, **characterized by** applying an oscillating voltage to a plurality of dielectrics (12, 52) respectively to generate electric vector potentials.

**3.** The electric vector potential generating method according to claim 2, wherein said plural dielectrics (12, 52) are disposed radially on substantially the same plane.

**4.** An energy propagation system **characterized by** using an electric vector potential, wherein the electric vector potential is a propagation medium for energy.

**5.** An energy propagation system according to claim 4 using an electric vector potential, **characterized by** comprising:

an energy sending apparatus (11) for generating an electric vector potential and sending it out; and
and energy receiving apparatus (21) for receiving a magnetic field formed by generation of the electric vector potential.

**6.** An energy propagation system according to claim 4 using an electric vector potential, **characterized by** comprising:

an energy sending apparatus (11) for applying an oscillating voltage to a plurality of dielectrics (12) respectively, generating electric vector potentials from the respective dielectrics (12), and sending them out; and
the energy receiving apparatus (21) is for receiving a magnetic field formed by propagation of the electric vector potential as an energy.

**7.** The energy propagation system according to claim 6, wherein said plural dielectrics (12) are disposed radially on substantially the same plane.

**8.** A communication system **characterized by** using an electric vector potential, wherein the electric vector potential is a signal propagation medium.

**9.** The communication system according to claim 8, wherein the electric vector potential is intermittently generated and propagated.

**10.** The communication system according to claim 8, wherein the electric vector potential varies to large and small levels.

**11.** A communication system according to claim 8
**characterized by** using an electric vector potential, comprising:

a sending device having means for generating an electric vector potential and sending it out; and
a receiving device having means (61) for detecting a magnetic field by the sent out electric vector potential.

**12.** A communication system using an electric vector potential according to claim 8, **characterized by** comprising:

a sending device having a dielectrics (52), a power source (58) for applying an oscillating voltage to the dielectrics (52), and means (57) for modulating the oscillating voltage corresponding to the signal to be sent out; and
a receiving device for detecting a magnetic field by the electric vector potential sent out from said sending device.

**13.** A communication system according to claim 8 **characterized by** using an electric vector potential, comprising:

a sending device for applying an oscillating voltage to a plurality of dielectrics (52) respectively to generate an electric vector potential from each dielectric (52), and sending it out as a signal propagation medium; and
a receiving device for detecting a magnetic field formed by propagation of the electric vector potential as a signal.

**14.** The communication system according to claim 13, further comprising means (57, 58) for applying the oscillating voltage to the respective plural dielectrics (52) simultaneously or alternately.

**15.** The communication system according to claim 13, further comprising means (57, 58) for applying the intermittent oscillating voltage to the respective plural dielectrics (52) simultaneously or alternately.

**16.** The communication system according to claim 13, 14, or 15, wherein said plural dielectrics (52) are disposed radially on substantially the same plane.

**17.** A communication system according to claim 8
**characterized by** using the electric vector potential, comprising:

a sending device having a plurality of dielectrics (52), a power source (58) for applying an oscillating voltage to these dielectrics (52) respectively, and means (57) for modulating corresponding to the signal to be sent out as the oscillating voltage as a signal, and generating an electric vector potential from the plural dielectrics (52); and
a receiving device for detecting a magnetic field formed by the electric vector potential which is generated and sent out from said sending device.

**18.** A sending device in a communication system
**characterized by** using an electric vector potential, wherein an electric vector potential is generated and sent out.

**19.** A sending device according to claim 18 in a communication system using an electric vector potential, comprising:

a dielectric (52);
a power source (58) for applying an oscillating voltage to said dielectric (52); and
means (57) for FM modulating the voltage to be applied to said dielectric (52) from said power source (58) corresponding to the signal to be sent out.

**20.** A sending device according to claim 18 in a communication system using an electric vector potential, **characterized by** comprising:

a dielectric (52);
a power source (58) for applying an oscillating voltage to said dielectric (52); and
means (57) for AM modulating the voltage to be applied to said dielectric (52) from said power source (58) corresponding to the signal to be sent out.

**21.** A sending device according to claim 18 in a communication system using an electric vector potential, comprising:

a dielectric (52);
a power source (58) for applying an oscillating voltage to said dielectric (52); and
means (57) for intermittently applying the voltage to be applied to said dielectric (52) from said power source (58) corresponding to the signal to be sent out.

**22.** The sending device according to claim 19, 20 or 21, wherein said dielectric (52) is covered on its outer circumference with an electromagnetic wave shielding material (71).

**23.** A sending device according to claim 18, in a communication system using an electric vector potential, wherein an oscillating voltage is applied to a plurality of dielectrics (52) respectively, and a generated electric vector potential is a signal propagation medium.

**24.** A sending device according to claim 18 in a communication system using an electric vector potential, comprising:

a plurality of dielectrics (52);
one or plural power sources (58) for applying an oscillating voltage to the respective dielectrics (52); and
means (57) for AM modulating or FM modulating the voltage to be applied to said dielectrics (52) from said power source (58) corresponding to the signal to be sent out.

**25.** A sending device according to claim 18 in a communication system using an electric vector potential, comprising:

a plurality of dielectrics (52);

one or plural power sources (58) for applying an oscillating voltage to the respective dielectrics (52); and means (57) for intermittently applying the voltage to be applied to said dielectrics (52) from said power source (58) corresponding to the signal to be sent out.

26. The sending device according to claim 23, 24 or 25, wherein said plural dielectrics (52) are each covered on their outer circumference with an electromagnetic wave shielding material (71).

27. The sending device according to claim 23, 24 or 25, wherein said plural dielectrics (52) are disposed radially on substantially the same plane.

28. A receiving device in a communication system **characterized by** using an electric vector potential, wherein magnetic field resulting from the generation of the electric vector potential is detected.

29. The receiving device according to claim 28, wherein the magnetic field resulting from the electric vector potential which is intermittently generated and propagated is detected.

30. The receiving device according to claim 28, wherein the magnetic field resulting from the electric vector potential which varies to large and small levels is detected.

31. A communication system according to claim 8 **characterized by** using an electric vector potential, comprising:

a sending device for applying an oscillating voltage to a dielectric (52) having a thickness of no more than 5 mm and a relative dielectric constant of more than 500, generating an electric vector potential from said dielectrics (52), and sending it as a signal propagation medium; and
a receiving device for detecting a magnetic field formed by propagation of the electric vector potential as a signal.

32. The communication system according to claim 31, wherein said dielectric (52) has an elliptical plate form in section, and electrodes (53, 54) are fixed to the two respective opposed elliptical bottom faces.

33. The communication system according to claim 31 or 32, wherein said dielectric (52) has an elliptical plate form in section, and the ratio of its elliptical long axis to short axis is more than 4.

34. The communication system according to claim 31, wherein said dielectrics (52) has a rectangular plate form in section, and electrodes (53, 54) are fixed to the two respective opposed rectangular bottom faces.

35. The communication system according to claim 31 or 34 wherein said dielectrics (52) has a rectangular plate form in section, and the ratio of the long side to the short side of the rectangle is more than 4.

36. A sending device in a communication system according to claim 18 **characterized by** using an electric vector potential, comprising:

a dielectric (52) having a thickness of no more than 5 mm and a relative dielectric constant of more than 500;
a power source (58) for applying an oscillating voltage to said dielectrics (52); and
means (57) for modulating the oscillating voltage as a signal corresponding to the signal to be sent out.

37. The sending device according to claim 36, wherein said dielectrics (52) has an elliptical plate form in section, and electrodes (53, 54) are fixed to the two respective opposed elliptical bottom faces.

38. The sending device according to claim 36, wherein said dielectrics (52) has an elliptical plate form in section, and the ratio of its elliptical long axis to short axis is more than 4.

39. The sending device according to claim 36, wherein said dielectrics (52) has a rectangular plate form in section, and electrodes (53, 54) are fixed to the two respective opposed rectangular bottom faces.

40. The sending device according to claim 36, wherein said dielectrics (52) has a rectangular plate form in section, and the ratio of the long side to the short side of the rectangle is more than 4.

41. A communication method **characterized by** using an electric vector potential, wherein that communication is carried out by connecting a wireless line (35) to be used for an electric vector potential propagation medium to a wire line (34) or to a wireless line (33) in which an electromagnetic wave is used as a propagation medium.

42. A communication system using an electric vector potential according to claim 8, comprising:

a sending device for converting an inputted signal to a voltage signal and applying it to a dielectrics (52) to generate an electric vector potential; and
a receiving device for receiving the electric vector potential, converting it to an electric signal and outputting the electric signal.

43. A communication system using an electric vector potential according to claim 8, comprising:

a first converter (61-66) for receiving the electric vector potential which is a propagation medium, and converting it to voice and outputting; and
a second converter (41-46) for converting the voice into an electric vector potential which is a propagation medium and sending.

44. In a communication system using an electric vector potential as a signal propagation medium, a receiving method for receiving a magnetic field formed by the time-derivative of the electric vector potential as the propagation signal, including detecting the magnetic field formed by the time-derivative of the electric vector potential with a magnetic sensor (61) which is magnetically shielded against the magnetic field having no relation with the electric vector potential which becomes the signal propagation medium.

45. The receiving method according to claim 44, wherein the electric vector potential is generated by applying an oscillating voltage to a dielectrics.

46. In a communication system using an electric vector potential as a signal propagation medium, a receiving device according to claim 28 for receiving a magnetic field formed by the time-derivative of the electric vector potential as a propagation signal, comprising:

a magnetic sensor (61) for detecting the magnetic field formed by the time-derivative of the electric vector potential; and
means (86, 87) for shielding said magnetic sensor (61) against the magnetic filed which has no relation with the electric vector potential which becomes the signal propagation medium.

47. The receiving device according to claim 46, wherein said magnetic sensor (61) is a parallel flux gate type magnetic sensor having a bar-like core (81) made of soft magnetic material, a detection coil (85) and an exciting coil (83) wound on said core (81), and a circuit (82) for leading to said exciting coil (83) the exciting current in which the resonance frequency of said core (81) agrees with the oscillation frequency of the oscillating magnetic field of the detection object.

48. The receiving device according to claim 46, wherein the detecting part of said magnetic sensor (61) is magnetically shielded with a soft magnetic material (86).

49. The receiving device according to claim 46, wherein the detecting part of said magnetic sensor (61) is magnetically shielded with a soft metal magnetic material (86) which is to be grounded.

50. A receiving device according to claim 28 in a communication system using an electric vector potential, comprising:

an exciting coil (83);
a detection coil (85);
a circuit (82) for energizing said exciting coil (83); and a circuit (84) for detecting the current led to said detection coil (85).

51. The receiving device according to claim 50, wherein said exciting coil (83) and detection coil (85) are covered with their outer circumferences with a magnetic shield material (86).

**Patentansprüche**

1. Potentialerzeugungsverfahren, **gekennzeichnet durch** Anlegen einer oszillierenden Spannung an ein Dielektrikum (12, 52), um elektrisches Vektorpotential zu erzeugen.

2. Verfahren zum Erzeugen elektrischen Potentials nach Anspruch 1, **gekennzeichnet durch** Anlegen einer oszillierenden Spannung an mehrere Dielektrika (12, 52), um elektrische Vektorpotentiale zu erzeugen.

3. Verfahren zum Erzeugen elektrischen Potentials nach Anspruch 2, bei dem die mehreren Dielektrika (12, 52) radial im wesentlichen auf der gleichen Ebene angeordnet sind.

4. Energieausbreitungssystem, **gekennzeichnet durch** die Verwendung eines elektrischen Vektorpotentials, bei dem das elektrische Vektorpotential ein Ausbreitungsmedium für Energie ist.

5. Energieausbreitungssystem nach Anspruch 4 unter Verwendung eines elektrischen Vektorpotentials, **dadurch gekennzeichnet, daß** es aufweist:

   - eine Energiesendevorrichtung (11) zum Erzeugen eines elektrischen Vektorpotentials und zum Aussenden desselben; und

   - eine Energieempfangsvorrichtung (21) zum Empfangen eines durch die Erzeugung des elektrischen Vektorpotentials erzeugten Magnetfelds.

6. Energieausbreitungssystem nach Anspruch 4 unter Verwendung eines elektrischen Vektorpotentials, **dadurch gekennzeichnet, daß** es aufweist;

   - eine Energiesendevorrichtung (11) zum Anlegen einer oszillierenden Spannung an mehrere Dielektrika (12), zum Erzeugen elektrischer Vektorpotentiale aus den jeweiligen Dielektrika (12) und zum Aussenden derselben; und

   - wobei die Energieempfangsvorrichtung (21) dem Empfang eines Magnetfelds dient, das durch Ausbreitung des elektrischen Vektorpotentials als Energie erzeugt wird.

7. Energieausbreitungssystem nach Anspruch 6, bei dem die mehreren Dielektrika (12) radial im wesentlichen auf dergleichen Ebene angeordnet sind.

8. Kommunikationssystem, **gekennzeichnet durch** die Verwendung eines elektrischen Vektorpotentials, wobei das elektrische Vektorpotential ein Signalausbreitungsmedium ist.

9. Kommunikationssystem nach Anspruch 8, bei dem das elektrische Vektorpotential intermittierend erzeugt und ausgebreitet wird.

10. Kommunikationssystem nach Anspruch 8, bei dem das elektrische Vektorpotential zu hohen und niedrigen Pegeln variiert.

11. Kommunikationssystem nach Anspruch 8, **gekennzeichnet durch** die Verwendung eines elektrischen Vektorpotentials, mit:

    - einer Sendevorrichtung mit Einrichtungen zum Erzeugen eines elektrischen Vektorpotentials und zum Aussenden desselben; und

    - einer Empfangsvorrichtung mit Einrichtungen (61) zum Erkennen eines Magnetfelds anhand des ausgesandten elektrischen Vektorpotentials.

12. Kommunikationssystem unter Verwendung eines elektrischen vektorpotentials, nach Anspruch 8, **dadurch ge-**

**kennzeichnet, daß** es aufweist:

- eine Sendevorrichtung mit einem Dielektrikum (52), einer Energiequelle (58) zum Anlegen einer oszillierenden Spannung an die Dielektrika (52) und einer Einrichtung (57) zum Modulieren der oszillierenden Spannung entsprechend dem auszusendenden Signal; und

- eine Empfangsvorrichtung zu Erkennen eines Magnetfelds durch das von der Sendevorrichtung ausgesandte elektrische Vektorpotential.

**13.** Kommunikationssystem nach Anspruch 8, **gekennzeichnet durch** die Verwendung eines elektrischen Vektorpotentials, mit:

- einer Sendevorrichtung zum Anlegen einer oszillierenden Spannung an mehrere Dielektrika (52), um ein elektrisches Vektorpotential aus jedem Dielektrikum (52) zu erzeugen und als ein Signalausbreitungsmedium auszusenden; und

- einer Empfangsvorrichtung zu Erkennen eines Magnetfelds, das **durch** die Ausbreitung des elektrischen Vektorpotentials als ein Signal gebildet ist.

**14.** Kommunikationssystem nach Anspruch 13, ferner mit Einrichtungen (57, 58) zum gleichzeitigen oder abwechselnden Anlegen der oszillierenden Spannung an die jeweiligen mehreren Dielektrika (52).

**15.** Kommunikationssystem nach Anspruch 13, ferner mit Einrichtungen (57, 58) zum gleichzeitigen oder abwechselnden Anlegen der intermittierend oszillierenden Spannung an die jeweiligen mehreren Dielektrika (52).

**16.** Kommunikationssystem nach Anspruch 13, 14 oder 15, bei dem die mehreren Dielektrika (52) radial auf im wesentlichen der gleichen Ebene angeordnet sind.

**17.** Kommunikationssystem nach Anspruch 8, **gekennzeichnet durch** das Verwenden des elektrischen Vektorpotentials, mit:

- einer Sendevorrichtung mit mehreren Dielektrika (52), einer Energiequelle (58) zum jeweiligen Anlegen einer oszillierenden Spannung an diese Dielektrika (52) und einer Einrichtung (57) zum Modulieren entsprechend dem als die oszillierende Spannung als Signal auszusendenden Signal und zum Erzeugen eines elektrischen Vektorpotentials aus den mehreren Dielektrika (52); und

- einer Empfangsvorrichtung zum Erkennen eines Magnetfelds, das **durch** das elektrische Vektorpotential gebildet ist, das von der Sendevorrichtung erzeugt und ausgesandt wird.

**18.** Sendevorrichtung in einer Kommunikationsvorrichtung, **gekennzeichnet durch** das Verwenden eines elektrischen Vektorpotentials, bei der ein elektrisches Vektorpotential erzeugt und ausgesandt wird.

**19.** Sendevorrichtung nach Anspruch 18 in einem Kommunikationssystem, das ein elektrisches Vektorpotential verwendet, mit:

- einem Dielektrikum (52);

- einer Energiequelle (58) zum Anlegen einer oszillierenden Spannung an das Dielektrikum (52); und

- einer Einrichtung (57) zum FM-Modulieren der an das Dielektrikum (52) anzulegenden Spannung von der Energiequelle (58) entsprechend dem auszusendenden Signal.

**20.** Sendevorrichtung nach Anspruch 18 in einem Kommunikationssystem, das ein elektrisches Vektorpotential verwendet, mit:

- einem Dielektrikum (52);

- einer Energiequelle (58) zum Anlegen einer oszillierenden Spannung an das Dielektrikum (52); und

- einer Einrichtung (57) zum AM-Modulieren der an das Dielektrikum (52) anzulegenden Spannung von der Energiequelle (58) entsprechend dem auszusendenden Signal.

21. Sendevorrichtung nach Anspruch 18 in einem Kommunikationssystem, das ein elektrisches Vektorpotential verwendet, mit:

- einem Dielektrikum (52);

- einer Energiequelle (58) zum Anlegen einer oszillierenden Spannung an das Dielektrikum (52); und

- einer Einrichtung (57) zum intermittierenden Anlegen der Spannung von der Energiequelle (58) an das Dielektrikum (52) entsprechend dem auszusendenden Signal.

22. Sendevorrichtung nach Anspruch 19, 20 oder 21, bei der das Dielektrikum (52) auf seinem Außenumfang mit einem gegen elektromagnetische Wellen abschirmenden Material (71) bedeckt ist.

23. Sendevorrichtung nach Anspruch 18 in einem Kommunikationssystem, das ein elektrisches Vektorpotential verwendet, bei der eine oszillierende Spannung an mehrere Dielektrika (52) angelegt wird, und ein erzeugtes elektrisches Vektorpotential ein Signalausbreitungsmedium ist.

24. Sendevorrichtung nach Anspruch 18 in einem Kommunikationssystem, das ein elektrisches Vektorpotential verwendet, mit:

- mehreren Dielektrika (52);

- einer oder mehreren Energiequellen (58) zum Anlegen einer oszillierenden Spannung an das Dielektrikum (52); und

- einer Einrichtung (57) zum AM-Modulieren oder FM-Modulieren der an die Dielektrika (52) anzulegenden Spannung von der Energiequelle (58) entsprechend dem auszusendenden Signal.

25. Sendevorrichtung nach Anspruch 18 in einem Kommunikationssystem, das ein elektrisches Vektorpotential verwendet, mit:

- mehreren Dielektrika (52);

- einer oder mehreren Energiequellen (58) zum Anlegen einer oszillierenden Spannung an das Dielektrikum (52); und

- einer Einrichtung (57) zum intermittierenden Anlegen der Spannung von der Energiequelle (58) an das Dielektrikum (52) entsprechend dem auszusendenden Signal.

26. Sendevorrichtung nach Anspruch 23, 24 oder 25, bei der die mehreren Dielektrika (52) jeweils auf ihrem Außenumfang mit einem gegen elektromagnetische Wellen abschirmenden Material (71) bedeckt sind.

27. Sendevorrichtung nach Anspruch 23, 24 oder 25, bei der die mehreren Dielektrika (52) radial auf im wesentlichen der gleichen Ebene angeordnet sind.

28. Empfangsvorrichtung in einem Kommunikationssystem, das ein elektrisches Vektorpotential verwendet, bei der ein aus der Erzeugung des elektrischen Vektorpotentials resultierendes Magnetfeld erkannt wird.

29. Empfangsvorrichtung nach Anspruch 28, bei der das Magnetfeld erkannt wird, das aus dem elektrischen Vektorpotential resultiert, das intermittierend erzeugt und ausgebreitet wird.

30. Empfangsvorrichtung nach Anspruch 28, bei der das Magnetfeld erkannt wird, das aus dem elektrischen Vektorpotential resultiert, das zu hohen und niedrigen Pegeln variiert.

31. Kommunikationssystem nach Anspruch 8, **gekennzeichnet durch** die Verwendung eines elektrischen Vektorpotentials, mit:

- einer Sendevorrichtung zum Anlegen einer oszillierenden Spannung an ein Dielektrikum (52) mit einer Dicke von nicht mehr als 5 mm und einer relativen dielektrischen Konstante von mehr als 500, zum Erzeugen eines elektrischen Vektorpotentials von den Dielektrika (52) und zum Senden desselben als ein Signalausbreitungsmedium; und

- einer Empfangsvorrichtung zum Erkennen eines **durch** die Ausbreitung des elektrischen Vektorpotentials als Signal erzeugten Magnetfelds.

32. Kommunikationssystem nach Anspruch 31, bei dem das Dielektrikum (52) im Schnitt die Form einer elliptischen Platte hat und Elektroden (53, 54) an den beiden jeweiligen gegenüberliegenden elliptischen Bodenflächen angebracht sind.

33. Kommunikationssystem nach Anspruch 31 oder 32, bei dem das Dielektrikum (52) im Schnitt die Form einer elliptischen Platte hat und das Verhältnis der langen Achse der Ellipse zur kurzen Achse der Ellipse mehr als 4 beträgt.

34. Kommunikationssystem nach Anspruch 31, bei dem das Dielektrikum (52) im Schnitt die Form einer rechteckigen Platte hat und Elektroden (53, 54) an den beiden jeweiligen gegenüberliegenden rechteckigen Bodenflächen angebracht sind.

35. Kommunikationssystem nach Anspruch 31 oder 34, bei dem das Dielektrikum (52) im Schnitt die Form einer rechteckigen Platte hat und das Verhältnis der langen Achse des Rechtecks zur kurzen Achse des Rechtecks mehr als 4 beträgt.

36. Kommunikationssystem nach Anspruch 18, **gekennzeichnet durch** die Verwendung eines elektrischen Vektorpotentials, mit:

- einem Dielektrikum (52) mit einer Dicke von nicht mehr als 5 mm und einer relativen dielektrischen Konstante von mehr als 500;

- einer Energiequelle (58) zum Anlegen einer oszillierenden Spannung an das Dielektrikum (52); und

- einer Einrichtung (57) zum Modulieren der oszillierenden Spannung als ein Signal entsprechend dem auszusendenden Signal.

37. Sendevorrichtung nach Anspruch 36, bei der das Dielektrikum (52) im Schnitt die Form einer elliptischen Platte hat und Elektroden (53, 54) an den beiden jeweiligen gegenüberliegenden elliptischen Bodenflächen angebracht sind.

38. Sendevorrichtung nach Anspruch 36, bei der das Dielektrikum (52) im Schnitt die Form einer elliptischen Platte hat und das Verhältnis der langen Achse der Ellipse zur kurzen Achse der Ellipse mehr als 4 beträgt.

39. Sendevorrichtung nach Anspruch 36, bei der das Dielektrikum (52) im Schnitt die Form einer rechteckigen Platte hat und Elektroden (53, 54) an den beiden jeweiligen gegenüberliegenden rechteckigen Bodenflächen angebracht sind,

40. Sendevorrichtung nach Anspruch 36, bei der das Dielektrikum (52) im Schnitt die Form einer rechteckigen Platte hat und das Verhältnis der langen Achse des Rechtecks zur kurzen Achse des Rechtecks mehr als 4 beträgt.

41. Kommunikartionsverfahren **gekennzeichnet durch** das Verwenden eines elektrischen Vektorpotentials, bei dem die Kommunikation **durch** das Verbinden einer für ein Medium zum Ausbreiten des elektrischen Vektorpotentials zu verwendenden drahtlosen Leitung (35) mit einer Drahtleitung (34) oder mit einer drahtlosen Leitung (33), bei der eine elektromagnetische Welle als Ausbreitungsmedium verwendet wird.

42. Kommunikationssystem nach Anspruch 8, **gekennzeichnet durch** das Verwenden des elektrischen Vektorpotentials, mit:

- einer Sendevorrichtung zum Umwandeln eines Eingangssignals in ein Spannungssignal und zum Anlegen desselben an ein Dielektrikum (52), um ein elektrisches Vektorpotential zu erzeugen; und

- einer Empfangsvorrichtung zum Empfangen des elektrischen Vektorpotentials, zum Wandeln desselben in ein elektrisches Signal und zum Ausgeben des elektrischen Signals.

43. Kommunikationssystem nach Anspruch 8, **gekennzeichnet durch** das Verwenden des elektrischen Vektorpotentials, mit:

- einem ersten Wandler (61-66) zum Empfangen des elektrischen Vektorpotentials, das ein Ausbreitungsmedium ist, und zum Umwandeln desselben in Stimme und zum Ausgeben derselben; und

- einem zweiten Wandler (41-46) zum Umwandeln der Stimme in ein elektrisches Vektorpotential, das ein Ausbreitungsmedium ist, und zum Übertragen desselben.

44. In einem Kommunikationssystem, das ein elektrisches Vektorpotential als ein Signalausbreitungsmedium verwendet, ist ein Empfangsverfahren zum Empfangen eines Magnetfelds verwendet, das durch die Zeitableitung des elektrischen Vektorpotentials als das Ausbreitungssignal gebildet ist, wobei das Verfahren das Erkennen des Magnetfelds, das aus der Zeitableitung des elektrischen Vektorpotentials gebildet ist, mittels eines Magnetsensors (61) umfaßt, der magnetisch gegen das Magnetfeld abgeschirmt ist, das keine Beziehung zu dem elektrischen Vektorpotential hat, das das Signalausbreitungsmedium wird.

45. Empfangsverfahren nach Anspruch 44, bei dem das elektrische Vektorpotential durch Anlegen einer oszillierenden Spannung an ein Dielektrikum erzeugt wird.

46. In einem Kommunikationssystem, das ein elektrisches Vektorpotential als ein Signalausbreitungsmedium verwendet, wird eine Empfangsvorrichtung nach Anspruch 28 zum Empfangen eines Magnetfelds verwendet, das durch die Zeitableitung des elektrischen Vektorpotentials als das Ausbreitungssignal gebildet ist, mit:

- einem Magnetsensor (61) zum Erkennendes durch die Zeitableitung des elektrischen Vektorpotentials gebildeten Magnetfelds; und

- einer Einrichtung (86, 87) zum Abschirmen des Magnetsensors (61) gegen das Magnetfeld, das keine Beziehung zu dem elektrischen Vektorpotential hat, das das Signalausbreitungsmedium wird.

47. Empfangsvorrichtung nach Anspruch 46, bei der der Magnetsensor (61) ein Magnetsensor vom Parallelflußgattertyp ist, der einen stangenartigen Kern (81) aus weichmagnetischem Material, eine Erkennungsspule (85) und eine auf den Kern (81) gewickelte Erregungsspule (83) und eine Schaltung (82) zum Leiten des Erregungsstroms an die Erregungsspule (82) aufweist, wobei die Resonanzfrequenz des Kerns (81) mit der Oszillationsfrequenz des oszillierenden Magnetfelds des Erkennungsgegenstands übereinstimmt.

48. Empfangsvorrichtung nach Anspruch 46, bei der der Erkennungsteil des Magnetsensors (61) magnetisch durch ein weichmagnetisches Material (86) abgeschirmt ist.

49. Empfangsvorrichtung nach Anspruch 46, bei der der Erkennungsteil des Magnetsensors (61) magnetisch durch ein weichmagnetisches Material (86) abgeschirmt ist, das mit Masse zu verbinden ist.

50. Empfangsvorrichtung nach Anspruch 28 In einem Kommunikationssystem, das ein elektrisches Vektorpotential aufweist, mit:

- einer Erregungsspule (83);

- einer Erkennungsspule (85);

- einer Schaltung (82) zum Beaufschlagen der Erregungsspule (83) mit Energie; und

- einer Schaltung (84) zum Erkennen des der Erkennungsspule (85) zugeleiteten Stroms.

**51.** Empfangsvorrichtung nach Anspruch 50, bei der der Außenumfang der Erregungsspule (83) und der Erkennungsspule (85) mit einem magnetischen Abschirmungsmaterial (86) bedeckt ist.

**Revendications**

**1.** Procédé de production d'un potentiel, **caractérisé par** l'application d'une tension oscillante sur un diélectrique (12, 52) afin de produire un potentiel vecteur électrique.

**2.** Procédé de production de potentiel vecteur électrique selon la revendication 1, **caractérisé par** l'application d'une tension oscillante sur une pluralité de diélectriques (12, 52) afin de produire respectivement des potentiels vecteur électrique.

**3.** Procédé de production de potentiel vecteur électrique selon la revendication 2, dans lequel ladite pluralité de diélectriques (12, 52) est disposée radialement sensiblement sur le même plan.

**4.** Système de propagation d'énergie **caractérisé par** l'utilisation d'un potentiel vecteur électrique, dans lequel le potentiel vecteur électrique est un support de propagation pour l'énergie.

**5.** Système de propagation d'énergie selon la revendication 4 utilisant un potentiel vecteur électrique, **caractérisé par le fait qu'**il comprend:

un dispositif d'émission d'énergie (11) destiné à produire un potentiel vecteur électrique et à l'envoyer ; et
un dispositif de réception d'énergie (21) destiné à recevoir un champ magnétique formé par la production du potentiel vecteur électrique.

**6.** Système de propagation d'énergie selon la revendication 4 utilisant un potentiel vecteur électrique, **caractérisé par le fait qu'**il comprend:

un dispositif d'émission d'énergie (11) destiné à appliquer une tension oscillante sur une pluralité de diélectriques (12) produisant respectivement des potentiels vecteur électrique à partir des diélectriques (12) respectifs, et à les envoyer ; et
le dispositif de réception d'énergie (21) est destiné à recevoir un champ magnétique formé par la propagation du potentiel vecteur électrique sous forme d'énergie.

**7.** Système de propagation d'énergie selon la revendication 6, dans lequel ladite pluralité de diélectriques (12) est disposée radialement sensiblement sur le même plan.

**8.** Système de communication, **caractérisé par** l'utilisation d'un potentiel vecteur électrique, dans lequel le potentiel vecteur électrique est un support de propagation de signal.

**9.** Système de communication selon la revendication 8, dans lequel le potentiel vecteur électrique est produit et se propage de manière intermittente.

**10.** Système de communication selon la revendication 8, dans lequel le potentiel vecteur électrique varie entre des niveaux élevé et faible.

**11.** Système de communication selon la revendication 8, **caractérisé par** l'utilisation d'un potentiel vecteur électrique, comprenant:

un dispositif d'émission comportant un moyen destiné à produire un potentiel vecteur électrique et à l'envoyer ; et
un dispositif de réception comportant un moyen (61) destiné à détecter un champ magnétique produit par le potentiel vecteur électrique envoyé.

**12.** Système de communication utilisant un potentiel vecteur électrique selon la revendication 8, **caractérisé par le fait qu'**il comprend:

**EP 0 889 607 B1**

un dispositif d'émission comprenant un diélectrique (52), une source de puissance (58) destinée à appliquer une tension oscillante sur le diélectrique (52) et un moyen (57) destiné à moduler la tension oscillante de manière correspondant au signal à envoyer ; et

un dispositif de réception destiné à détecter un champ magnétique produit par le potentiel vecteur électrique envoyé à partir dudit dispositif d'émission.

13. Système de communication selon la revendication 8, **caractérisé par** l'utilisation d'un potentiel vecteur électrique, comprenant:

un dispositif d'émission destiné à appliquer une tension oscillante sur une pluralité de diélectriques (52) afin de produire respectivement un potentiel vecteur électrique à partir de chaque diélectrique (52), et à l'envoyer en tant que support de propagation de signal ; et

un dispositif de réception destiné à détecter un champ magnétique formé par propagation du potentiel vecteur électrique en tant que signal.

14. Système de communication selon la revendication 13, comprenant, en outre, un moyen (57, 58) destiné à appliquer la tension oscillante sur la pluralité de diélectriques (52) respective de manière simultanée ou alternée.

15. Système de communication selon la revendication 13, comprenant, en outre, un moyen (57, 58) destiné à appliquer la tension oscillante intermittente sur la pluralité de diélectriques (52) respective de manière simultanée ou alternée.

16. Système de communication selon la revendication 13, 14 ou 15, dans lequel ladite pluralité de diélectriques (52) est disposée radialement sensiblement sur le même plan.

17. Système de communication selon la revendication 8, **caractérisé par** l'utilisation du potentiel vecteur électrique, comprenant:

un dispositif d'émission comportant une pluralité de diélectriques (52), une source de puissance (58) destinée à appliquer respectivement une tension oscillante sur ces diélectriques (52), et un moyen (57) destiné à moduler de manière à correspondre au signal à envoyer tel que la tension oscillante en tant que signal, et à produire un potentiel vecteur électrique à partir de la pluralité de diélectriques (52) ; et

un dispositif de réception destiné à détecter un champ magnétique formé par le potentiel vecteur électrique qui est produit et envoyé à partir dudit dispositif d'émission.

18. Dispositif d'émission dans un système de communication, **caractérisé par** l'utilisation d'un potentiel vecteur électrique, dans lequel un potentiel vecteur électrique est produit et envoyé.

19. Dispositif d'émission selon la revendication 18, dans un système de communication utilisant un potentiel vecteur électrique, comprenant:

un diélectrique (52) ;

une source de puissance (58) destinée à appliquer une tension oscillante sur ledit diélectrique (52) ; et

un moyen (57) destiné à moduler en FM (modulation de fréquence) la tension à appliquer sur ledit diélectrique (52) à partir de ladite source de puissance (58) de manière correspondant au signal à envoyer.

20. Dispositif d'émission selon la revendication 18, dans un système de communication utilisant un potentiel vecteur électrique, comprenant:

un diélectrique (52) ;

une source de puissance (58) destinée à appliquer une tension oscillante sur ledit diélectrique (52) ; et

un moyen (57) destiné à moduler en AM (modulation d'amplitude) la tension à appliquer sur ledit diélectrique (52) à partir de ladite source de puissance (58) de manière correspondant au signal à envoyer.

21. Dispositif d'émission selon la revendication 18, dans un système de communication utilisant un potentiel vecteur électrique, comprenant:

un diélectrique (52) ;

une source de puissance (58) destinée à appliquer une tension oscillante sur ledit diélectrique (52) ; et

47

un moyen (57) destiné à appliquer de manière intermittente la tension à appliquer sur ledit diélectrique (52) à partir de ladite source de puissance (58) de manière correspondant au signal à envoyer.

22. Dispositif d'émission selon la revendication 19, 20 ou 21, dans lequel ledit diélectrique (52) est recouvert sur sa circonférence externe par un matériau de blindage des ondes électromagnétiques (71).

23. Dispositif d'émission selon la revendication 18, dans un système de communication utilisant un potentiel vecteur électrique, dans lequel une tension oscillante est appliquée respectivement sur une pluralité de diélectriques (52), et un potentiel vecteur électrique produit est un support de propagation de signal.

24. Dispositif d'émission selon la revendication 18, dans un système de communication utilisant un potentiel vecteur électrique, comprenant:

une pluralité de diélectriques (52) ;
une ou plusieurs sources de puissance (58) destinées à appliquer une tension oscillante sur les diélectriques (52) respectifs ; et
un moyen (57) destiné à moduler en amplitude (AM) ou à moduler en fréquence (FM) la tension à appliquer sur lesdits diélectriques (52) à partir de ladite source de puissance (58) de manière correspondant au signal à envoyer.

25. Dispositif d'émission selon la revendication 18, dans un système de communication utilisant un potentiel vecteur électrique, comprenant:

une pluralité de diélectriques (52) ;
une ou plusieurs sources de puissance (58) destinées à appliquer une tension oscillante sur les diélectriques (52) respectifs ; et
un moyen (57) destiné à appliquer de manière intermittente la tension à appliquer sur lesdits diélectriques (52) à partir de ladite source de puissance (58) de manière correspondant au signal à envoyer.

26. Dispositif d'émission selon la revendication 23, 24 ou 25, dans lequel chaque diélectrique de ladite pluralité de diélectriques (52) est recouvert sur sa circonférence externe par un matériau de blindage des ondes électromagnétiques (71).

27. Dispositif d'émission selon la revendication 23, 24 ou 25, dans lequel les diélectriques de ladite pluralité de diélectriques (52) sont disposés radialement sensiblement sur le même plan.

28. Dispositif de réception dans un système de communication, **caractérisé par** l'utilisation d'un potentiel vecteur électrique, dans lequel le champ magnétique provenant de la production du potentiel vecteur électrique est détecté.

29. Dispositif de réception selon la revendication 28, dans lequel le champ magnétique résultant du potentiel vecteur électrique qui est produit de manière intermittente et se propage est détecté.

30. Dispositif de réception selon la revendication 28, dans lequel le champ magnétique résultant du potentiel vecteur électrique qui varie entre des niveaux élevé et faible est détecté.

31. Système de communication selon la revendication 8, **caractérisé par** l'utilisation d'un potentiel vecteur électrique, comprenant:

un dispositif d'émission destiné à appliquer une tension oscillante sur un diélectrique (52) présentant une épaisseur non supérieure à 5 mm et une constante diélectrique relative supérieure à 500, à produire un potentiel vecteur électrique à partir desdits diélectriques (52) et à l'envoyer en tant que support de propagation de signal ; et
un dispositif de réception destiné à détecter un champ magnétique formé par la propagation du potentiel vecteur électrique en tant que signal.

32. Système de communication selon la revendication 31, dans lequel ledit diélectrique (52) présente, en section, une forme plate elliptique, et des électrodes (53, 54) sont fixées sur les deux faces inférieures elliptiques opposées respectives.

33. Système de communication selon la revendication 31 ou 32, dans lequel ledit diélectrique (52) présente, en section, une forme en plaque elliptique et le rapport de son axe long sur l'axe court d'ellipse est supérieur à 4.

34. Dispositif de communication selon la revendication 31, dans lequel lesdits dispositifs (52) présentent, en section, une forme en plaque rectangulaire, et des électrodes (53, 54) sont fixées sur les deux faces inférieures rectangulaires opposées respectives.

35. Dispositif de communication selon la revendication 31 ou 34, dans lequel lesdits diélectriques (52) présentent, en section, une forme en plaque rectangulaire et le rapport du côté long sur le côté court du rectangle est supérieur à 4.

36. Dispositif d'émission dans un système de communication selon la revendication 18, **caractérisé par** l'utilisation d'un potentiel vecteur électrique, comprenant:

    un diélectrique (52) présentant une épaisseur pas supérieure à 5 mm et une constante diélectrique relative supérieure à 500 ;
    une source de puissance (58) destinée à appliquer une tension oscillante sur lesdits diélectriques (52) ; et
    un moyen (57) destiné à moduler la tension oscillante comme un signal correspondant au signal à envoyer.

37. Dispositif d'émission selon la revendication 36, dans lequel lesdits diélectriques (52) présentent, en section, une forme en plaque elliptique, et des électrodes (53, 54) sont fixées sur les deux faces inférieures elliptiques opposées respectives.

38. Dispositif d'émission selon la revendication 36, dans lequel lesdits diélectriques (52) présentent, en section, une forme en plaque elliptique, et le rapport de son axe elliptique long sur l'axe court est supérieur à 4.

39. Dispositif d'émission selon la revendication 36, dans lequel lesdits diélectriques (52) présentent, en section, une forme en plaque rectangulaire, et les électrodes (53, 54) sont fixées sur les deux faces inférieures rectangulaires opposées respectives.

40. Dispositif d'émission selon la revendication 36, dans lequel lesdits diélectriques (52) présentent, en section, une forme en plaque rectangulaire, et le rapport du côté long sur le côté court du rectangle est supérieur à 4.

41. Procédé de communication **caractérisé par** l'utilisation d'un potentiel vecteur électrique, dans lequel la communication est assurée en reliant une ligne sans fil (35), à utiliser pour un support de propagation de potentiel électrique, à une ligne filaire (34) ou à une ligne sans fil (33) dans laquelle une onde électromagnétique est utilisée comme support de propagation.

42. Système de communication utilisant un potentiel vecteur électrique selon la revendication 8, comprenant:

    un dispositif d'émission destiné à convertir un signal d'entrée en un signal de tension et à l'appliquer sur des diélectriques (52) afin de produire un potentiel vecteur électrique ; et
    un dispositif de réception destiné à recevoir le potentiel vecteur électrique, à le convertir en un signal électrique et à délivrer le signal électrique.

43. Système de communication utilisant un potentiel vecteur électrique selon la revendication 8, comprenant:

    un premier convertisseur (61 à 66) destiné à recevoir le potentiel vecteur électrique qui est un support de propagation, à le convertir en un signal vocal et à le délivrer ; et
    un second convertisseur (41 à 46) destiné à convertir le signal vocal en un potentiel vecteur électrique qui est un support de propagation et à l'envoyer.

44. Procédé de réception, dans un système de communication utilisant un potentiel vecteur électrique comme support de propagation de signal, destiné à recevoir un champ magnétique formé par la dérivée temporelle du potentiel vecteur électrique en tant que le signal de propagation, comprenant la détection du champ magnétique formé par la dérivée temporelle du potentiel vecteur électrique avec un capteur magnétique (61) qui est blindé magnétiquement par rapport au champ magnétique ne présentant pas de relation avec le potentiel vecteur électrique qui devient le support de propagation de signal.

**45.** Procédé de réception selon la revendication 44, dans lequel le potentiel vecteur électrique est produit en appliquant une tension oscillante sur un diélectrique.

**46.** Dispositif de réception selon la revendication 28, dans un système de communication utilisant un potentiel vecteur électrique comme support de propagation de signal, destiné à recevoir un champ magnétique formé par la dérivée temporelle du potentiel vecteur électrique en tant que signal de propagation, comprenant:

un capteur magnétique (61) destiné à détecter le champ magnétique formé par la dérivée temporelle du potentiel vecteur électrique ; et
un moyen (86, 87) destiné à blinder ledit capteur magnétique (61) par rapport au champ magnétique ne présentant pas de relation avec le potentiel vecteur électrique qui devient le support de propagation de signal.

**47.** Dispositif de réception selon la revendication 46, dans lequel ledit capteur magnétique (61) est un capteur magnétique du type fluxmètre parallèle comprenant un noyau en forme de barre (81) réalisé en un matériau magnétiquement doux, une bobine de détection (85) et une bobine d'excitation (83) enroulée sur ledit noyau (81), et un circuit (82) destiné à conduire vers ladite bobine d'excitation (83) le courant d'excitation, dans lequel la fréquence de résonance dudit noyau (81) correspond à la fréquence d'oscillation du champ magnétique oscillant de l'objet de détection.

**48.** Dispositif de réception selon la revendication 46, dans lequel la partie de détection dudit capteur magnétique (61) est blindée magnétiquement par un matériau magnétique doux (86).

**49.** Dispositif de réception selon la revendication 46, dans lequel la partie de détection dudit capteur magnétique (61) est magnétiquement blindée par un matériau magnétique métallique doux (86) qui doit être mis à la masse.

**50.** Dispositif de réception selon la revendication 28, dans un système de communication utilisant un potentiel vecteur électrique, comprenant:

une bobine d'excitation (83) ;
une bobine de détection (85) ;
un circuit (82) destiné à alimenter ladite bobine d'excitation (83) ; et
un circuit (84) destiné à détecter le courant conduit vers ladite bobine de détection (85).

**51.** Dispositif de réception selon la revendication 50, dans lequel lesdites bobine d'excitation (83) et bobine de détection (85) sont recouvertes sur leur circonférence externe par un matériau de blindage magnétique (86).

FIG. 1

# FIG. 2A

# FIG. 2B

FIG. 3A

FIG. 3C

FIG. 3B

FIG. 4

FIG. 5

FIG. 6

FIG. 7

ELECTROMAGNETIC WAVE OF RECEIVED SIGNAL

INTERMEDIATE FREQUENCY CONVERTER 42

41 AMPLITUDE LIMITER

FREQUENCY DISCRIMINATOR

45 VOLTAGE AMPLIFIER

46 SENDING DEVICE

CURRENT OF RECEIVED SIGNAL

FREQUENCY MODULATOR 43

VOLTAGE CONVERTER 44

EP 0 889 607 B1

FIG. 8

FIG. 9

FIG. 10

RECEIVED ELECTRIC
VECTOR POTENTIAL

61
MAGNETIC
SENSOR

62
INTEGRATOR

64
FREQUENCY
MODULATOR

63
FREQUENCY
AMPLIFICATION
MODULATOR

66
VOLTAGE
AMPLIFIER

65
MICROWAVE
SENDER

WIRE LINE 34

WIRELESS
LINE 33

EP 0 889 607 B1

FIG. 11

RECEIVED ELECTRIC
VECTOR POTENTIAL

61

MAGNETIC
SENSOR

62

INTEGRATOR

64

FREQUENCY
MODULATOR

66

VOLTAGE
AMPLIFIER

SPEAKER 67

EP 0 889 607 B1

FIG. 12

# FIG. 13A

# FIG. 13B

FIG. 14

y AXIS ( b AXIS )

Hx

52

x AXIS ( a AXIS )

Hy

0

FIG. 15

OSCILLATING
MAGNETIC
FIELD

82
EXCITATION
CIRCUIT

85    81

83

RECEPTION
CIRCUIT

84

FIG. 16

FIG. 17A

MAGNETIC B
FLUX
DENSITY

H
INDUCTANCE

FIG. 17B

H(t)
INDUCTANCE

t
TIME

FIG. 17C

ø(t)
MAGNETIC
FLUX

t
TIME

FIG. 17D

V(t)
ELECTRO-
MOTIVE
FORCE

t
TIME

EP 0 889 607 B1

FIG. 18

FIG. 19